# EUROPÄISCHE PATENTSCHRIFT

(11) **EP 1 621 386 B1**
(45) Veröffentlichungstag und Bekanntmachung des Hinweises auf die Patenterteilung: **02.04.2008**
(21) Anmeldenummer: 05016335.1
(22) Anmeldetag: 27.07.2005
(51) Int. Cl.: B60J 7/22

(54) **Windstopeinrichtung**
Wind stop device
Dispositif pare-vent

(30) Priorität: 27.07.2004 DE 102004037482
(43) Veröffentlichungstag der Anmeldung: 01.02.2006
(73) Patentinhaber: SCAMBIA INDUSTRIAL DEVELOPMENTS AKTIENGESELLSCHAFT, 9494 Schaan (LI)
(72) Erfinder: Rimmelspacher, Bernd, 76287 Rheinstetten (DE); Götz, Matthias, 71706 Markgröningen (DE); Riehle, Jörg, 71679 Asperg (DE); Fischer, Michael, 71679 Asperg (DE)
(74) Vertreter: Hoeger, Stellrecht & Partner Patentanwälte

(56) Entgegenhaltungen:
- EP-A- 0 361 624
- DE-A1- 4 338 102
- DE-C1- 10 215 836
- GB-A- 2 225 992

## Beschreibung

Die Erfindung betrifft eine Windstopeinrichtung für Kraftfahrzeuge, insbesondere für Cabriofahrzeuge, umfassend eine in Höhe einer Gürtellinie einer Karosserie angeordnete Abdeckung für einen Teilbereich einer Fahrgastraumöffnung der Karosserie, ein mit der Abdeckung über Gelenke verbundenes Windschott, welches von einer auf der Abdeckung aufliegenden unwirksamen Stellung in eine sich über die Gürtellinie der Karosserie erhebende wirksame Stellung verschwenkbar ist, in welcher sich das Windschott quer zur Abdeckung erstreckt, und einen Antrieb, mit welchem das Windschott zumindest von der unwirksamen Stellung in die wirksame Stellung bewegbar ist.

Derartige Windstopeinrichtungen sind aus der DE 43 38 102 bekannt.

Bei diesen besteht das Problem, dass das Windschott möglichst komfortabel bedienbar sein sollte.

Der Erfindung liegt daher die Aufgabe zugrunde, den Bedienungskomfort eines derartigen Windschotts zu erhöhen.

Diese Aufgabe wird bei einer Windstopeinrichtung der gattungsgemäßen Art erfindungsgemäß dadurch gelöst, dass der Antrieb mindestens einem Gelenk zugeordnet ist und dass der Antrieb und das Gelenk eine Einheit bilden.

Der Vorteil der erfindungsgemäßen Lösung ist darin zu sehen, dass Gelenk und Antrieb räumlich zusammengefasst werden können, so dass Antrieb und Gelenk eine Einheit bilden und sich somit der Antrieb besonders vorteilhaft in die konstruktive Lösung einfügen lässt und folglich besteht mit dem Antrieb eine vorteilhafte und komfortable Möglichkeit, das Windschott auf Wunsch in die wirksame Stellung zu bewegen. Insbesondere kann dies auch während der Fahrt möglich sein, ohne die Fahrt zu unterbrechen.

Eine besonders zweckmäßige Lösung sieht dabei vor, dass der Antrieb in einem Lagerkörper des Gelenks integriert ist.

Hinsichtlich der Anordnung des Lagerkörpers sind die unterschiedlichsten Möglichkeiten denkbar.

So sieht eine vorteilhafte Ausführungsform vor, dass der Lagerkörper in einen Windschottrahmen integriert ist.

Besonders zweckmäßig ist es dabei, wenn der Lagerkörper in einem Eckbereich des Windschottrahmens angeordnet ist.

Eine andere vorteilhafte Lösung sieht vor, daß der Lagerkörper in die Abdeckung integriert ist.

Vorzugsweise ist dabei der Lagerkörper in ein Abdeckungsteil der Abdeckung selbst integriert.

Auch hier läßt sich optisch der Lagerkörper besonders einfach dann integrieren, wenn der Lagerkörper in einem Eckbereich des Abdeckungsteils angeordnet ist, wobei dieser Eckbereich insbesondere ein Eckbereich eines Rahmens des Abdeckungsteils ist.

Hinsichtlich der Ausbildung des Antriebs sind die unterschiedlichsten Möglichkeiten denkbar.

Eine vorteilhafte Lösung sieht vor, daß der Antrieb einen federelastischen Energiespeicher umfaßt, in welchem die Energie für das Verschwenken des Windschotts von der unwirksamen Stellung in die wirksame Stellung speicherbar ist.

Zweckmäßigerweise ist dabei der federelastische Energiespeicher so ausgebildet, daß er in der unwirksamen Stellung des Windschotts die maximale Energie gespeichert hat.

Ferner ist zweckmäßigerweise vorgesehen, daß der federelastische Energiespeicher in der wirksamen Stellung des Windschotts die minimale Energie gespeichert hat.

Der Vorteil, daß der Energiespeicher selbst in der wirksamen Stellung des Windschotts noch eine minimale Energie gespeichert hat ist darin zu sehen, daß sich dann der federelastische Energiespeicher dazu einsetzen läßt, das Windschott in der wirksamen Stellung zu halten und in Richtung der wirksamen Stellung mit einer Kraft zu beaufschlagen.

Hinsichtlich der Realisierung des federelastischen Energiespeichers sind die unterschiedlichsten Varianten denkbar.

Beispielsweise wäre es denkbar, den Energiespeicher in einen Windschottrahmen oder einen Rahmen der Abdeckung zu integrieren.

Eine besonders kompakt bauende Lösung sieht vor, daß der federelastische Energiespeicher eine Torsionsfeder umfaßt.

Mit einer derartigen Torsionsfeder lassen sich bei geringem Raum große für die Schwenkbewegung des Windschotts relativ zur Abdeckung zweckmäßig einsetzbare Kräfte speichern.

Besonders zweckmäßig ist es dabei, wenn die Torsionsfeder in dem Gelenk integriert angeordnet ist, so daß eine räumlich besonders günstige Realisierungsform vorliegt.

Hinsichtlich der Sicherheit ist es besonders günstig, wenn sich das Windschott langsam von der unwirksamen Stellung in die wirksame Stellung getrieben durch den Antrieb bewegt.

Um eine derartige möglichst langsame Bewegung bei einem federelastischen Energiespeicher realisieren zu können, ist vorzugsweise vorgesehen, daß dem Antrieb ein Dämpfungselement zugeordnet ist, so daß die Bewegung des Windschotts von der wirksamen in die unwirksame Stellung durch das Dämpfungselement gebremst ausführbar ist.

Ein derartiges Dämpfungselement läßt sich prinzipiell völlig unabhängig von dem Antrieb anordnen.

Besonders zweckmäßig ist es jedoch, wenn das Dämpfungselement mindestens einem der Gelenke zugeordnet ist.

Räumlich und auch für die optische Ausgestaltung noch vorteilhafter ist es, wenn das Dämpfungselement in das jeweilige Gelenk integriert ist.

Prinzipiell wäre es denkbar, in einem Gelenk den federelastischen Kraftspeicher und in dem anderen Gelenk das Dämpfungselement anzuordnen.

Um jedoch über das Windschott wirksame Torsionskräfte zu vermeiden, ist vorzugsweise vorgesehen, daß der federelastische Energiespeicher und das Dämpfungselement demselben Gelenk zugeordnet sind.

Um das Windschott in der unwirksamen Stellung zu halten, ist es insbesondere auch im Fall eines federelastischen Energiespeichers als Antrieb zweckmäßig, wenn das Windschott in der unwirksamen Stellung gegenüber der Abdeckung mit einer Fixiereinrichtung fixierbar ist.

Eine derartige Fixiereinrichtung hat zunächst bei einem federelastischen Energiespeicher den Vorteil, daß sich der federelastische Kraftspeicher beim Überführen des Windschotts von der wirksamen Stellung in die unwirksame Stellung spannen und die Energie speichern läßt und diese durch die Fixiereinrichtung so lange an dem federelastischen Energiespeicher gespeichert werden kann, bis ein Schwenken des Windschotts von der unwirksamen Stellung in die wirksame Stellung erwünscht ist.

Darüber hinaus ist eine derartige Fixiereinrichtung aber in allen Fällen von Vorteil, daß sie die Möglichkeit schafft, in der unwirksamen Stellung das Windschott sicher und gegen unerwartete Bewegungen zu fixieren.

Besonders zweckmäßig ist es dabei, wenn die Fixiereinrichtung ein Sperrelement umfaßt, das selbsttätig in eine Sperrstellung übergeht und manuell in eine Lösestellung überführbar ist.

Mit einem derartigen Sperrelement lassen sich die erfindungsgemäß benötigten Funktionen der Fixiereinrichtung besonders einfach und kostengünstig realisieren.

Die Fixiereinrichtung kann an unterschiedlichsten Stellen der Karosserie und der Windstopeinrichtung angeordnet sein.

Eine Möglichkeit sieht vor, daß die Fixiereinrichtung an der Karosserie angeordnet ist und auf das Windschott - beispielsweise mittels eines Riegels - wirkt.

Eine andere vorteilhafte Lösung sieht vor, daß die Fixiereinrichtung an der Abdeckung oder dem Windschott angeordnet ist und somit die Abdeckung und das Windschott relativ zueinander fixierbar sind.

Dabei ist es denkbar, die Fixiereinrichtung in einem mittigen Bereich des Windschotts und der Abdeckung anzuordnen.

Eine andere vorteilhafte Möglichkeit sieht vor, die Fixiereinrichtung im Bereich von mindestens einem der Gelenke anzuordnen.

Ein besonders günstiges Ausführungsbeispiel sieht vor, daß die Fixiereinrichtung an der Abdeckung angeordnet ist.

Insbesondere dann, wenn die Abdeckung aus mehreren Abdeckungsteilen besteht, ist vorzugsweise vorgesehen, daß die Fixiereinrichtung an einem der Abdeckungsteile angeordnet ist.

Um die Fixiereinrichtung zweckmäßigerweise betätigen zu können, ist außerdem vorgesehen, daß die Fixiereinrichtung durch eine Betätigungseinrichtung im Sinne eines Lösens der Fixierung betätigbar ist.

Eine derartige Betätigungseinrichtung kann grundsätzlich nahe der Fixiereinrichtung, beispielsweise auch am selben Abdeckungsteil, angeordnet sein.

Besonders zweckmäßig ist jedoch eine Lösung, bei welcher die Betätigungseinrichtung an dem jeweils anderen Abdeckungsteil angeordnet ist.

Damit besteht in besonders vorteilhafterweise die Möglichkeit, die Betätigungseinrichtung und die Fixiereinrichtung dann zu trennen, wenn die Windstopeinrichtung in ihren zusammengeklappten Zustand überführt ist.

Beispielsweise sieht eine günstige Lösung vor, daß mit der Betätigungseinrichtung in einem aufgeklappten Zustand der Abdeckung über die Trennebene hinweg die Fixiereinrichtung im Sinne eines Lösens derselben betätigbar ist.

Hierbei ist es günstig, wenn nach Verlassen des vollständig aufgeklappten Zustandes der Abdeckung die Fixiereinrichtung nicht mehr betätigbar ist.

Dies lässt sich konstruktiv einfach dadurch realisieren, dass die Betätigungseinrichtung einen Betätigungskopf aufweist, mit welchem durch hinweggreifen über die Trennebene die Fixiereinrichtung beaufschlagbar ist.

Besonders günstig ist es dabei, wenn der Betätigungskopf nach Verlassen des vollständig aufgeklappten Zustandes der Abdeckung so weit von der Fixiereinrichtung entfernt ist, dass diese nicht mehr betätigbar ist.

Um ergonomisch günstig die Betätigungseinrichtung betätigen zu können, ist bei einem vorteilhaften Ausführungsbeispiel vorgesehen, dass die Betätigungseinrichtung einen Betätigungshebel aufweist, der fahrerseitig der Abdeckung angeordnet ist, so dass von Seiten des Fahrers des Kraftfahrzeugs in einfacher Weise ein Übergang des Windschotts von der unwirksamen Stellung in die wirksame Stellung herbeigeführt werden kann.

Bei einer weiteren vorteilhaften Lösung ist vorgesehen, dass die Fixiereinrichtung so ausgebildet ist, dass bei einer Bewegung des Windschotts in einer Einschwenkrichtung in Richtung seiner unwirksamen Stellung die Fixiereinrichtung in eine Sperrstellung übergeht.

Das heißt, dass die Fixiereinrichtung nicht zwangsläufig so ausgebildet sein muss, dass sie selbständig vor Einschwenken des Windschotts in die unwirksame Stellung in die Sperrstellung übergeht, sondern dass beispielsweise beim Einschwenken des Windschotts in die unwirksame Stellung der Übergang der Fixiereinrichtung von einer Lösestellung in die Sperrstellung erreichbar ist.

Ferner ist vorzugsweise vorgesehen, daß die in der Sperrstellung stehende Fixiereinrichtung durch eine Bewegung des Windschotts in der Einschwenkrichtung und anschließende Bewegung des Windschotts in einer Ausschwenkrichtung in eine Lösestellung übergeht.

Diese Lösung schafft beispielsweise die Möglichkeit, das Windschott in seiner unwirksamen Stellung in Richtung der Einschwenkbewegung zu beaufschlagen und somit in dieser Richtung über die unwirksame Stellung hinwegzubewegen, wodurch ein Übergang der Fixiereinrichtung von ihrer Sperrstellung in ihre Lösestellung eingeleitet wird, so daß das Windschott angetrieben durch den Antrieb von der unwirksamen Stellung selbsttätig in die wirksame Stellung übergehen kann.

Besonders günstig ist es hierbei, wenn die Fixiereinrichtung als Fangeinrichtung ausgebildet ist, in welcher ein Einfangelement festlegbar ist.

In diesem Fall ist insbesondere vorgesehen, daß die Fixiereinrichtung einen Fangschieber umfaßt, welcher zwischen einer in der Ausschwenkrichtung aus dem Fangschiebergehäuse ausgefahrenen Lösestellung und einer in der Einschwenkrichtung in das Fangschiebergehäuse eingefahrenen Sperrstellung bewegbar ist.

Vorzugsweise ist hierbei der Fangschieber so ausgebildet, daß er einen Führungskörper und ein mit diesem bewegbar verbundenes Fängerelement umfaßt, welches in der Sperrstellung in einer das Einfangelement festlegenden Stellung und in der Lösestellung in einer das Einfangelement freigebenden Stellung steht.

Das Fängerelement ist beispielsweise quer zur Einschwenkrichtung und Ausschwenkrichtung bewegbar, insbesondere auf das Führungselement zu und von diesem weg, wobei diese Bewegbarkeit zum Festlegen und Loslassen des Einfangelements dient.

Ferner ist vorzugsweise der Fangschieber durch ein elastisches Element, beispielsweise eine Feder, beaufschlagt, so daß dieser stets die Tendenz hat, sich in Richtung seiner Lösestellung zu bewegen.

Eine besonders vorteilhafte Variante dieses erfindungsgemäßen Ausführungsbeispiels sieht vor, daß der Fangschieber durch Einwirkung des Einfangelements zwischen der Sperrstellung und der Lösestellung bewegbar ist.

Im Zusammenhang mit der bisherigen Erläuterung der einzelnen Ausführungsbeispiele wurde hinsichtlich des Antriebs zunächst der federelastische Energiespeicher erläutert.

Alternativ dazu sieht ein weiteres bevorzugtes Ausführungsbeispiel vor, daß der Antrieb als elektrischer Antrieb ausgebildet ist.

Somit können die Bewegungen des Windschotts beispielsweise vom Fahrer während der Fahrt gesteuert werden, so daß ohne anzuhalten das Windschott zwischen der wirksamen und der unwirksamen Stellung hin- und herbewegbar ist.

Ein derartiger elektrischer Antrieb umfaßt im einfachsten Fall einen elektrischen Antriebsmotor.

Um jedoch eine sichere und somit langsame Schwenkbewegung des Windschotts relativ zur Abdeckung ausführen zu können, ist vorzugsweise vorgesehen, daß der Antrieb ein von dem elektrischen Antriebsmotor getriebenes Getriebe umfaßt, wobei das Getriebe zumindest dafür sorgt, möglichst hohes Drehmoment beim Schwenken des Windschotts relativ zur Abdeckung zu erhalten.

Ein Getriebe schafft aber außerdem die Möglichkeit aufgrund seiner Eigenhemmung das Windschott in der Stellung festzustellen, welche es durch Antreiben des Getriebes mittels des Elektromotors erreicht hat.

Dabei besteht die Möglichkeit, das Windschott nicht nur entweder in die wirksame oder die unwirksame Stellung zu verschwenken.

Vielmehr bietet ein derartiger elektrischer Antrieb mit Getriebe die Möglichkeit, das Windschott in alle Zwischenstellungen zwischen der unwirksamen und der wirksamen Stellung zu verschwenken, so daß eine optimale Anpassung der Stellung des Windschotts erreichbar ist, die dafür sorgt, daß der für einen Fahrer oder Beifahrer lästige Windzug oder lästige Zugerscheinungen und/oder lästige Geräusche durch den Fahrtwind unterbleiben, jedoch ein für Fahrer und Beifahrer angenehmer ständiger Luftaustausch erfolgt.

Ferner ist es besonders zweckmäßig, wenn das Getriebe als selbsthemmendes Getriebe ausgebildet ist, so daß die Notwendigkeit von Fixiereinrichtungen entfällt und das Getriebe stets in der Stellung verbleibt, in welche es durch den Elektromotor hin bewegt wurde.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine perspektivische Ansicht eines ersten Ausführungsbeispiels einer erfindungsgemäßen Windstopeinrichtung in einer wirksamen Stellung des Windschotts;
- Fig. 2: einen Schnitt längs Linie 2-2 in Fig. 1;
- Fig. 3: eine perspektivische Darstellung ähnlich Fig. 1 in einer unwirksamen Stellung des Windschotts;
- Fig. 4: einen Schnitt längs Linie 4-4 in Fig. 3;
- Fig. 5: einen Schnitt längs Linie 5-5 in Fig. 1 durch ein Gelenk mit integriertem Antrieb beim ersten Ausführungsbeispiel;
- Fig. 6: einen Schnitt ähnlich Fig. 4 bei einem zweiten Ausführungsbeispiel einer erfindungsgemäßen Windstopeinrichtung;
- Fig. 7: eine Seitenansicht eines dritten Ausführungsbeispiels einer erfindungsgemäßen Windstopeinrichtung im Bereich eines der Gelenke;
- Fig. 8: einen Schnitt längs Linie 8-8 in Fig. 7;
- Fig. 9: eine perspektivische Teilansicht eines vierten Ausführungsbeispiels einer erfindungsgemäßen Windstopeinrichtung;
- Fig. 10: eine vergrößerte Darstellung eines Gelenks zwischen Windschott und Abdeckung mit Antrieb bei durchsichtig dargestelltem Lagerkörper;
- Fig. 11: einen Schnitt längs Linie 11-11 in Fig. 9;
- Fig. 12: eine Ansicht ähnlich Fig. 3 eines fünften Ausführungbeispiels einer erfindungsgemäßen Windstopeinrichtung;
- Fig. 13: einen Schnitt durch die Abdeckung im Bereich einer Fixiereinrichtung und einer dieser zugeordneten Betätigungseinrichtung beim fünften Ausführungsbeispiel;
- Fig. 14: eine Explosionsdarstellung der Fixiereinrichtung und der Betätigungseinrichtung im das Windschott in seiner unwirksamen Stellung haltenden Zustand;
- Fig. 15: eine Darstellung ähnlich Fig. 14 nach Lösen des Windschotts in seinem relativ zur Abdeckung fixierten Zustand;
- Fig. 16: eine Darstellung eines Zusammenklappens der Abdeckungsteile der Abdeckung bei Unwirksammachen der Betätigungseinrichtung;
- Fig. 17: eine perspektivische Darstellung eines sechsten Ausführungsbeispiels mit einer als Fangeinrichtung ausgebildeten Fixiereinrichtung;
- Fig. 18: eine Darstellung ähnlich Fig. 17 des sechsten Ausführungsbeispiels mit dem Windschott in seiner unwirksamen an einem der Abdeckungselemente fixierten Stellung;
- Fig. 19: eine perspektivisch vergrößerte Darstellung der als Fangeinrichtung ausgebildeten Fixiereinrichtung des sechsten Ausführungsbeispiels;
- Fig. 20: eine vergrößerte Darstellung eines Führungskörpers der Fangeinrichtung mit dessen Kulissenbahn und
- Fig. 21: einen Schnitt ähnlich Fig. 5 durch ein siebtes Ausführungsbeispiel.

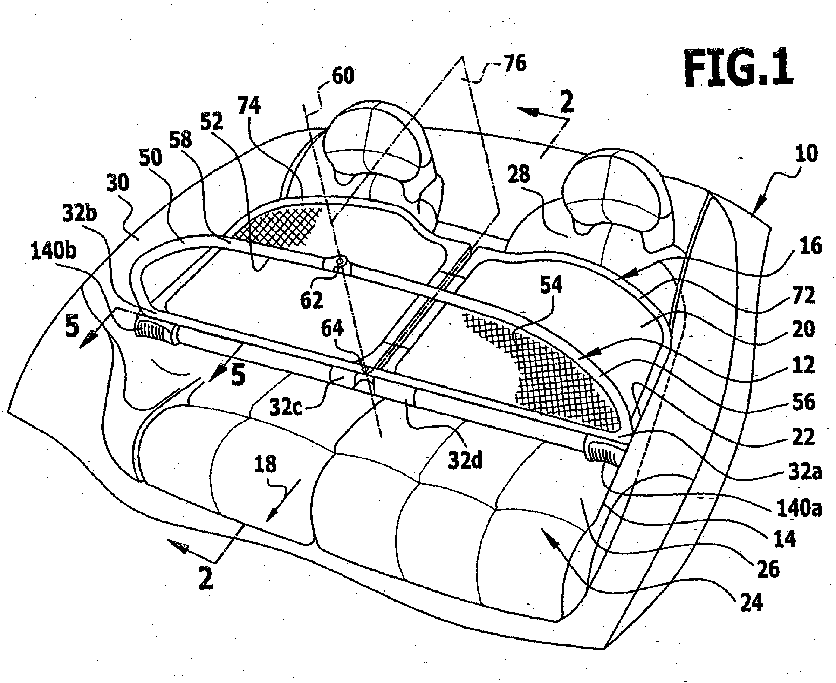

Ein in Fig. 1 dargestelltes erstes Ausführungsbeispiel einer Windstopeinrichtuhg für ein Kraftfahrzeug, insbesondere für ein Cabriofahrzeug, dessen Karosserie 10 in Fig. 1 ausschnittsweise dargestellt ist, umfaßt ein Windschott 12, welches in seiner in Fig. 1 dargestellten wirksamen Stellung über eine Gürtellinie 14 der Karosserie 10 des Kraftfahrzeugs nach oben übersteht, sowie eine Abdeckung 16, welche bezogen auf eine Fahrtrichtung 18 einen hinter dem in seiner wirksamen Stellung stehenden Windschott 12 liegenden Teilbereich 20 einer ungefähr in Höhe der Gürtellinie 14 angeordneten Fahrgastraumöffnung 22 abdeckt. Beispielsweise liegt der Teilbereich 20 der Fahrgastraumöffnung 22 über einer Rücksitzanlage 24, welche eine Sitzbank 26, sowie eine Rücksitzlehne 28 aufweist.

Vorzugsweise schließt dabei der Teilbereich 20 der Fahrgastraumöffnung 22 unmittelbar an der Rücksitzlehne 28 an und erstreckt sich in der Fahrtrichtung 18 bis zum Windschott 12 ebenfalls unter Anschluß an Karosserieseitenwände 30 im Bereich der Gürtellinie 14.

Zweckmäßigerweise sitzt dabei das Windschott 12 in seiner wirksamen Stellung so, daß dieses im wesentlichen unmittelbar hinter zeichnerisch in Fig. 1 nicht dargestellten Kopfstützen von Vordersitzen des Kraftfahrzeugs angeordnet ist.

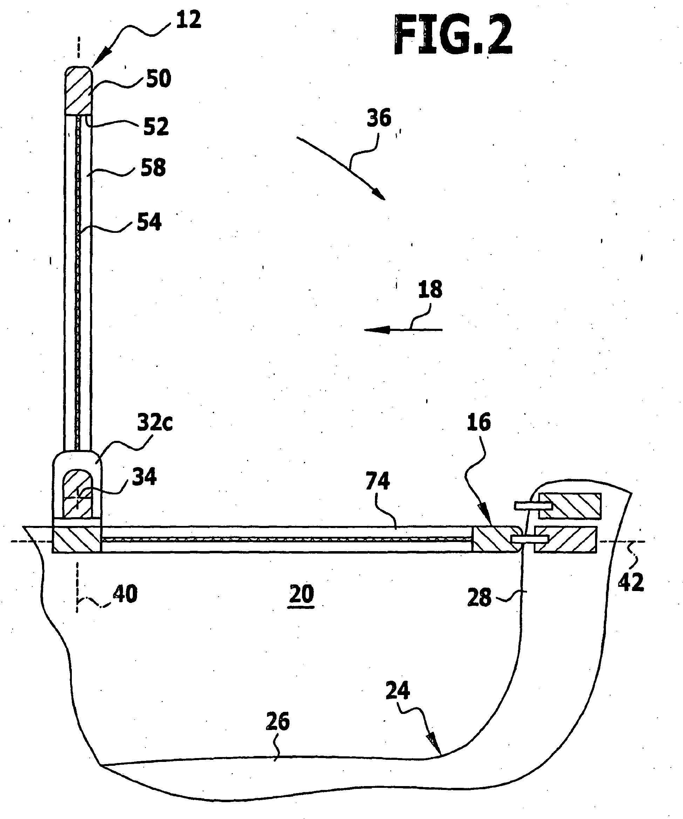

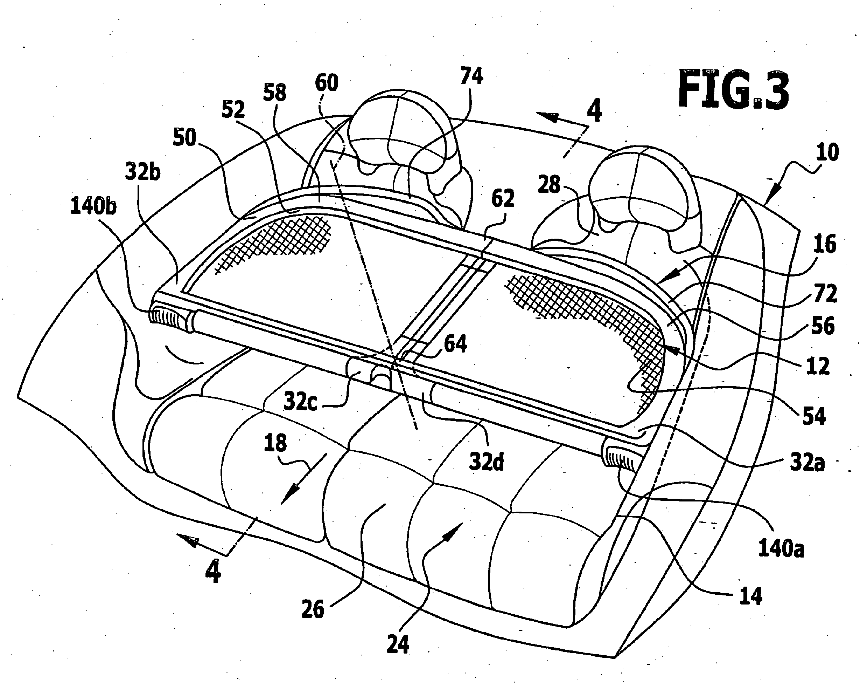

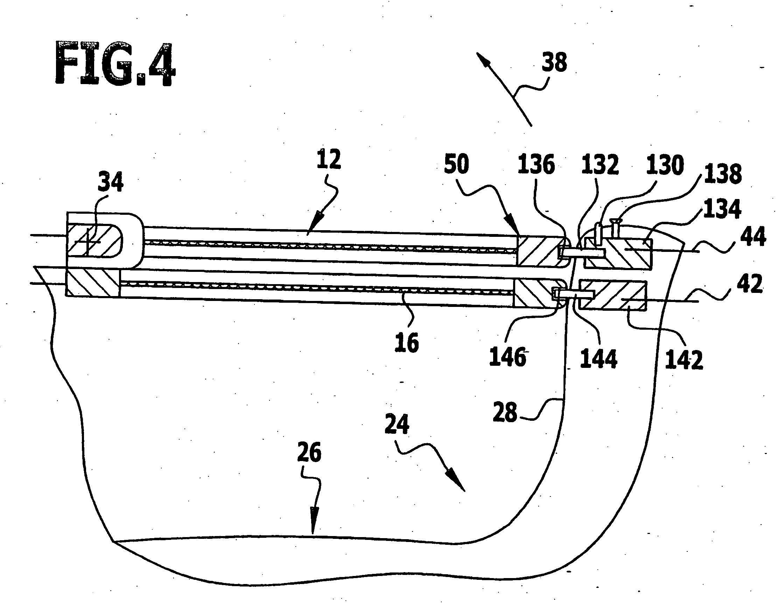

Die Abdeckung 16 ist mit dem Windschott 12 über Gelenke 32, vorzugsweise über die Gelenke 32a, b, c, d, um eine Achse 34, dargestellt in Fig. 2, verschwenkbar verbunden, so daß das Windschott 12 von der in Fig. 1 und 2 dargestellten wirksamen Stellung durch Schwenken um die Achse 34 in einer Schwenkrichtung 36 in eine in Fig. 3 und 4 dargestellte unwirksame Stellung verschwenkbar ist, in welcher das Windschott 12 sich im wesentlichen parallel zur Abdeckung 16 erstreckt und im wesentlichen auf diesem aufliegend angeordnet ist.

Von dieser unwirksamen Stellung läßt sich das Windschott 12 wieder durch Verschwenken in einer Schwenkrichtung 38 um die Achse 34 wieder in die in Fig. 1 und 2 dargestellte wirksame Stellung bewegen, in welcher sich das Windschott 12 in einer Ebene 40 erstreckt, die quer zu einer Ebene 42 verläuft, in welcher sich die Abdeckung 16 erstreckt.

Die Ebene 40 schließt dabei in der wirksamen Stellung des Windschotts 12 mit der Ebene 42 vorzugsweise einen Winkel zwischen ungefähr 60° und ungefähr 120°, vorzugsweise einen Winkel zwischen ungefähr 70° und ungefähr 110° ein.

Dagegen erstreckt sich das Windschott 12 in der unwirksamen Stellung, dargestellt in Fig. 3, in einer Ebene 44, die ungefähr parallel zur Ebene 42 verläuft.

Das Windschott 12 weist, wie insbesondere in Fig. 1 und Fig. 3 dargestellt, einen Windschottrahmen 50 auf, welcher eine Rahmenöffnung 52 umschließt, der durch einen Windschottrahmeneinsatz 54 erschlossen ist, wobei der Windschottrahmeneinsatz 54 luftdurchlässig, jedoch windhindernd ausgebildet ist, das heißt so, daß er eine schnelle Luftströmung blockiert.

Der Windschottrahmen 50 kann dabei einstückig ausgebildet sein. Es ist aber auch denkbar, den Windschottrahmen 50, wie in Fig. 1 und 3 dargestellt, aus zwei Rahmenteilen 56 und 58 auszubilden, die um eine Schwenkachse 60, welche beispielsweise die Mittelachse des Windschottrahmens 50 darstellt, relativ zueinander verschwenkbar sind.

In ihrer aufgeklappten Funktionsstellung erstrecken sich die beiden Rahmenteile 56 und 58 mit maximaler Ausdehnung quer zur Fahrtrichtung 18 in der Ebene 40 oder 44, so daß die beiden Rahmenteile 56 und 58 auch den Windschottrahmeneinsatz 54 in der Ebene 40 oder 44 gespannt halten.

Vorzugsweise sind die Rahmenteile 56 und 58 so ausgebildet, daß sie über Scharniere 62 und 64 miteinander verbunden sind und sich jeweils C-förmig beiderseits der Schwenkachse 60 erstrecken, so daß in der Funktionsstellung die Rahmenöffnung 52 insgesamt von den C-förmigen Rahmenteilen 56 und 58 umschlossen und somit insbesondere im Bereich der Schwenkachse 60 nicht durch Streben geteilt ist.

Die Abdeckung 16 ist ebenfalls aus zwei Abdeckungsteilen 72, 74 gebildet, die im Bereich einer Trennebene 76, in welcher auch die Schwenkachse 60 liegt, voneinander getrennt sind.

Die beiden Abdeckungsteile 72 und 74 sind jeweils über die Gelenke 32a und 32b mit dem Windschottrahmen 50 verbunden.

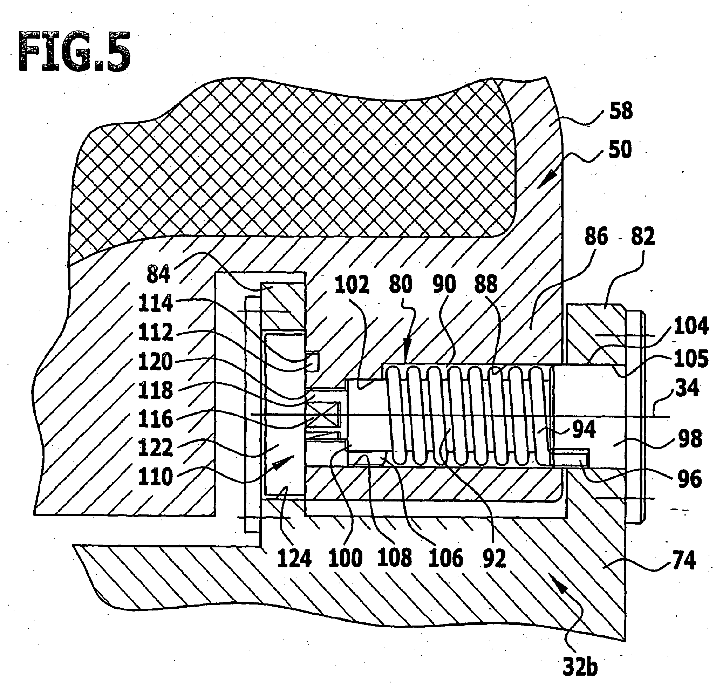

Eines der Gelenke 32a, b weist, wie in Fig. 5 dargestellt, einen Lagerkörper 80 auf, welcher beispielsweise am Windschottrahmen 50 angeordnet ist, insbesondere in diesem in einem Eckbereich 86 integriert angeformt ist, und zwei Lagerflansche 82 und 84, welche beispielsweise an dem jeweiligen Abdeckungsteil 72, 74 angeordnet sind.

Ferner ist in einer Ausnehmung 88 des Lagerkörpers 80 ein als Ganzes mit 90 bezeichneter Antrieb vorgesehen, welcher dazu dient, das Windschott 12 von der unwirksamen Stellung in die wirksame Stellung selbsttätig zu verschwenken.

Der Antrieb 90 umfaßt dabei eine um einen Lagerzapfen 92 herum wendelförmig verlaufende Torsionsfeder 94, welche mit einem ersten Ende 96 drehfest in einem Kopf 98 des Lagerzapfens verankert ist, wobei der Kopf 98 seinerseits drehfest in dem Lagerflansch 82 aufgenommen ist, und zwar so, daß eine Mittelachse des Lagerzapfens 92 koaxial zur Achse 34 verläuft, um welche das Windschott 12 relativ zur Abdeckung 16 verschwenkbar sein soll.

Der Lagerzapfen 92 erstreckt sich von seinem Kopf 98 bis zu einem Lagerabschnitt 100, welcher in einer Ausnehmung 102 des Lagerkörpers 80 drehbar gelagert ist, so daß sich der Lagerkörper 80 und die Ausnehmung 102 um den fest mit dem Lagerflansch 82 verbundenen Lagerzapfen 92 drehen kann.

Außerdem erstreckt sich der Kopf 98 mit einer zylindrischen Mantelfläche 104 durch einen Durchbruch 105 des Lagerflansches 82 hindurch und bildet mit seiner zylindrischen Mantelfläche 104, dadurch, daß diese in die Ausnehmung 88 des Lagerkörpers 80 eingreift, eine Drehlagerung des Lagerkörpers 80 relativ zum fest mit dem Lagerflansch 82 verbundenen Kopf 98 des Lagerzapfens 92.

Ferner ist die wendelförmig um die Lagerzapfen 92 verlaufenden Torsionsfeder 94 mit einem zweiten Ende 106 fest in dem Lagerkörper 80, beispielsweise einer Ausnehmung 108 desselben verankert.

Die Torsionsfeder 94 ist nun so ausgebildet, daß diese in der unwirksamen Stellung des Windschotts 12 gespannt ist, das heißt Energie speichert, die dazu eingesetzt werden kann, das Windschott 12 von der unwirksamen Stellung in die wirksame Stellung zu bewegen, wobei allerdings die Torsionsfeder 94 vorzugsweise noch eine derart starke Vorspannung in der wirksamen Stellung des Windschotts 12 aufweist, daß die Torsionsfeder 94 in der Lage ist, das Windschott 12 in der wirksamen Stellung zu halten.

Die zum Verschwenken des Windschotts 12 von der unwirksamen in die wirksame Stellung erforderliche Energie wird dadurch aufgebracht, daß die gespannte Torsionsfeder 94 durch Festlegen des ersten Endes 96 relativ zum Lagerflansch 82 und somit relativ zum Abdeckungsteil 74 auf den Lagerkörper 80, und zwar mit dem zweiten Ende 106 über die Ausnehmung 108, derart einwirkt, daß der Lagerkörper 80 relativ zu den Lagerflanschen 82 und 84 verschwenkt wird und zwar in dem Sinne, daß sich das Windschott 12 von der unwirksamen Stellung in die wirksame Stellung aufrichtet. Das Windschott 12 wird dann beispielsweise durch die Torsionsfeder 94 in der wirksamen Stellung gehalten.

Um diese durch die Torsionsfeder 94 bewirkte Schwenkbewegung gedämpft ablaufen zu lassen, ist dem Antrieb 90 noch ein Dämpfungselement 110 zugeordnet, welches beispielsweise über ein Formschlußelement 112, welches in eine Ausnehmung 114 im Lagerkörper 80 eingreift, formschlüssig und somit drehfest mit dem Lagerkörper 80 verbunden ist.

Dieses Dämpfungselement 110 weist eine Antriebswelle 116 auf, welches formschlüssig in einen sich an den Lagerabschnitt 100 anschließenden Endabschnitt 118 des Lagerzapfens 92 eingreift und drehfest mit diesem verbunden ist. Auch der Endabschnitt 118 des Lagerzapfens 92 durchsetzt einen Durchbruch 120 des Lagerkörpers 80, welcher sich zwischen der Ausnehmung 102 und dem Dämpfungselement 110 erstreckt, welches mit einem Gehäuse 122 in einer Ausnehmung 124 im Lagerflansch 84 vorzugsweise drehbar gelagert ist, so daß über das Gehäuse 122, das drehfest und radial unverschieblich über das Formschlußelement 112 und die Ausnehmung 114 mit dem Lagerkörper 80 verbunden ist, eine weitere Lagerung des Lagerkörpers 80 über den Lagerflansch 84 erfolgt.

Dadurch, daß das Gehäuse 122 des Dämpfungselements 110 sich mit dem Lagerkörper 80 mitdreht, während die Antriebswelle 116 drehfest letztlich mit dem Lagerzapfen 92 verbunden ist und somit drehfest mit dem Lagerflansch 82 gekoppelt ist, kann das Dämpfungselement 110, beispielsweise durch Reibung, ein Bremsen der Schwenkbewegung des Lagerkörpers 80 relativ zu den Lagerflanschen 82, 84 bewirken und somit eine langsame und sanfte Schwenkbewegung des Windschotts 12 relativ zur Abdeckung 16 erzeugen, so daß eine Verletzungsgefahr von Personen ausgeschlossen ist und andererseits auch ein starker Schlag des Windschotts 12 beim Anschlagen an zeichnerisch nicht dargestellte, die wirksame Stellung festlegende Anschläge vermieden wird, gegen welche die Torsionsfeder 94 das Windschott 12, das heißt insbesondere den Windschottrahmen 50, in der wirksamen Stellung anlegt und in Anlage hält, um die wirksame Stellung des Windschotts 12 selbsttätig aufrecht zu erhalten.

Um das Windschott 12 in seiner unwirksamen Stellung, in welcher die Torsionsfeder 94 maximal gespannt ist, fixieren zu können, ist beispielsweise an der Karosserie 10, vorzugsweise in Fortsetzung der Rücksitzlehne 28, wie in Fig. 4 dargestellt, eine Fixiereinrichtung 130 vorgesehen, mit welcher das Windschott 12 in seiner unwirksamen Stellung festlegbar ist.

Die Fixiereinrichtung 130 umfaßt beispielsweise als Sperrelement einen Sperriegel 132, welcher in einem Riegelgehäuse 134, welches an der Karosserie 10 gehalten ist, bewegbar geführt ist und in der Lage ist, in eine Riegelaufnahme 136 im Windschottrahmen 50 einzugreifen und somit den Windschottrahmen 50 in der unwirksamer Stellung bei gespannter Torsionsfeder 94 festzulegen.

Beispielsweise läßt sich der Sperriegel 132 dann aus der Riegelaufnahme 136 herausbewegen, wenn ein Betätigungselement 138 betätigt wird.

In diesem Fall ist das Windschott 12 frei bewegbar und kann betrieben durch die Torsionsfeder 94 sich in der Schwenkrichtung 38 von der unwirksamen Stellung in die wirksame Stellung bewegen.

Ferner ist die gesamte Windstopeinrichtung an der Karosserie 10 vorzugsweise noch dadurch fixierbar, daß, wie in Fig. 1 und 3 dargestellt, die Abdeckungsteile 72 und 74 Halteeinrichtungen 140a, 140b aufweisen, welche dazu dienen, die Abdeckungsteile 72 und 74 in der Karosserie 10 zu verankern.

Beispielsweise greifen die Halteeinrichtungen 140a, 140b mit einem Haltedorn in eine zeichnerisch nicht dargestellte Öffnung der Karosserie 10 ein.

Darüber hinaus sind die Abdeckungsteile 72 und 74 mit Halteeinrichtungen 142 im Bereich der Rücksitzlehne 28 an der Karosserie 10 verankert, wobei die Halteeinrichtung 142 beispielsweise einen Haltedorn 144 aufweist, welcher in eine Ausnehmung 146 in dem Abdeckungsteil 72 oder 74 eingreift und dieses zusätzlich zu den Halteeinrichtungen 140a, 140b ebenfalls noch im Bereich der Rücksitzlehne 28 festlegt.

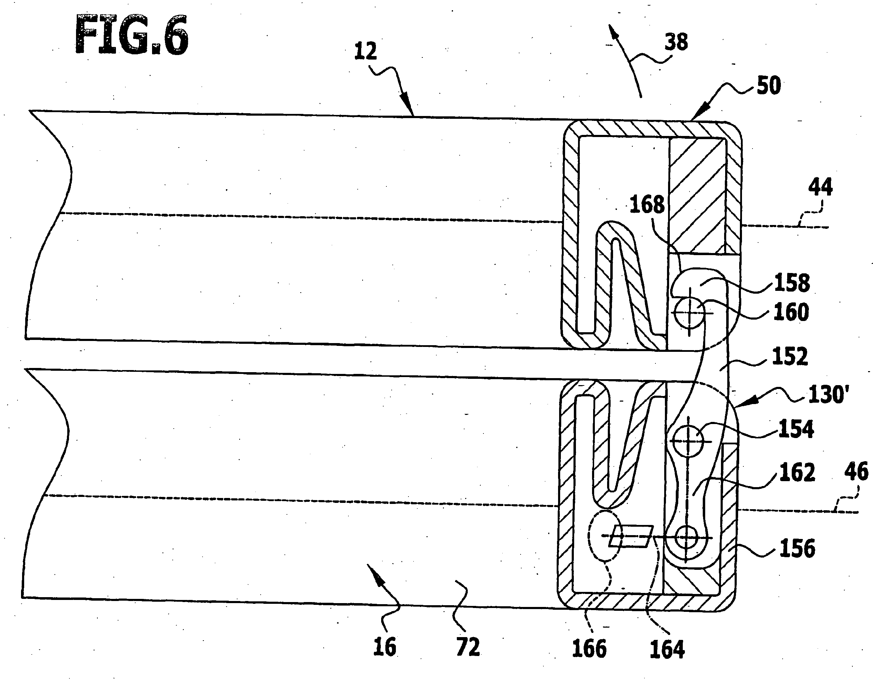

Bei einem zweiten Ausführungsbeispiel einer Windstopeinrichtung, dargestellt in Fig. 6, sind diejenigen Teile, die mit denen des ersten Ausführungsbeispiels identisch sind, mit denselben Bezugszeichen versehen, so daß auf die Ausführungen zum ersten Ausführungsbeispiel voll inhaltlich Bezug genommen werden kann.

Bei dem zweiten, in Fig. 6 dargestellten Ausführungsbeispiel wird der Windschottrahmen 50 des Windschotts 12 relativ zum jeweiligen Abdeckungsteil 72 durch eine gegenüber dem ersten Ausführungsbeispiel modifizierte Fixiereinrichtung 130' gehalten.

Diese Fixiereinrichtung 130' umfaßt als Sperrelement einen Schwenkriegel 152, welcher um eine Achse 154 schwenkbar in einem Rahmen 156 des Abdeckungsteils 72 gehalten ist.

Dieser Schwenkriegel 152 umfaßt außerdem eine Riegelnase 158, um eine beispielsweise als Bolzen ausgebildete Riegelaufnahme 160 zu hintergreifen, sofern der Schwenkriegel 152 in seiner verriegelnden Stellung steht.

Darüber hinaus umfaßt der Schwenkriegel 152 auf einer der Riegelnase 158 gegenüberliegenden Seite der Achse 154 einen Betätigungsarm 162, auf welchen beispielsweise mittels eines Zugelements 164, beispielsweise eines Seilzugs eingewirkt werden kann, um die Riegelnase 158 außer Eingriff mit der Riegelaufnahme 160 zu bringen, nämlich durch Schwenken der Schwenkriegels 152 um die Achse 154.

Das Zugelement 164 ist beispielsweise in dem Rahmen 156 des jeweiligen Abdeckungsteils 72, 74 zu einem Betätigungselement 166 geführt, über welches manuell mit Zug auf das Zugelement 164 einwirkbar ist, um die Riegelnase 158 mit der Riegelaufnahme 160 außer Eingriff zu bringen und somit eine freie Bewegung des Windschotts 12 von der unwirksamen, in Fig. 6 dargestellten Stellung in seine wirksame Stellung zu erlauben, wie dies bereits im Zusammenhang mit den voranstehenden Ausführungsbeispielen beschrieben wurde.

Darüber hinaus umfaßt die Riegelnase noch eine Auflaufschräge 168, welche dazu führt, daß beim Verschwenken des Windschotts 12 in die unwirksame Stellung die auf diese Auflaufschräge 168 wirkende Riegelaufnahme 160 den Schwenkriegel 152 um die Achse 154 aus seiner verriegelnden Stellung heraus verschwenkt, so daß die Riegelaufnahme 160 an der Riegelnase 158 soweit vorbei bewegt werden kann, bis diese die Riegelaufnahme 160 hintergreift und somit das Windschott 12 gegen eine Schwenkbewegung in der Schwenkrichtung 38 festlegt.

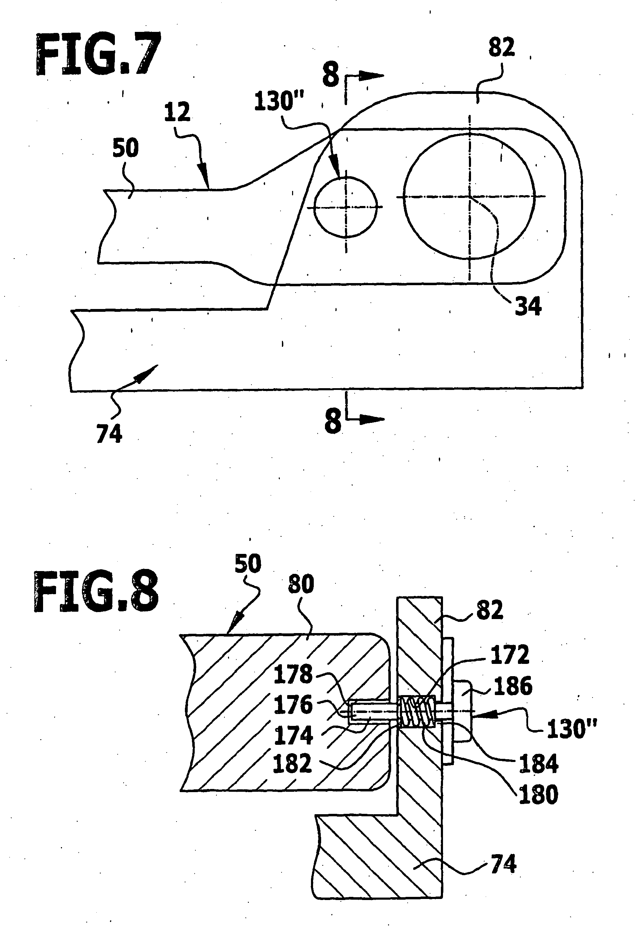

Bei einem dritten Ausführungsbeispiel einer erfindungsgemäßen Windstopeinrichtung ist, wie in Fig. 7 und Fig. 8 dargestellt, eine weitere Variante 130" einer Fixierungseinrichtung vorgesehen.

Bei dem dritten Ausführungsbeispiel ist der Lagerflansch 82 vergrößert ausgebildet, so daß in diesem die Fixiereinrichtung 130" vorgesehen sein kann.

Hierzu ist in dem Lagerflansch 82 eine Aufnahmebohrung 172 vorgesehen, in welcher als Sperrelement ein Zugriegel 174 geführt ist, wobei der Zugriegel in ungefähr demselben Abstand von dem Abdeckungselement 74 angeordnet ist, wie die Achse 34.

Der Zugriegel 174 ist so ausgebildet, daß er die Aufnahmebohrung 172 durchsetzt und in der Lage ist, mit einem Ende 176 in eine Zugriegelaufnahme 178, vorgesehen ungefähr im Lagerkörper 80 des Windschottrahmens 50, einzutauchen.

Der Zugriegel 174 ist ferner durch eine Feder 180 in Richtung seiner verriegelnden Stellung beaufschlagt, wobei die Feder 180 auf eine am Zugriegel 174 vorgesehene Schulter 182 wirkt, während sie sich andererseits an einem Führungsflansch 184 der Aufnahmebohrung 172 abstützt, die den Zugriegel 174 führt.

Ferner ist der Zugriegel 174 mit einem Betätigungsknopf 186 versehen, an welchem eine Bedienungsperson angreifen kann, um den Zugriegel 174 mit seinem Ende 176 aus der Zugriegelaufnahme 178 herauszubewegen und somit dem Windschott 12 die Freiheit zu geben, sich unter Wirkung der Torsionsfeder 94 in die wirksame Stellung zu bewegen.

Sowohl beim zweiten und beim dritten Ausführungsbeispiel wird für dieselben Teile der Windstopeinrichtung dieselben Bezugszeichen wie beim ersten Ausführungsbeispiel verwendet, so daß hinsichtlich sämtlicher nicht bei dem zweiten und dritten Ausführungsbeispiel im einzelnen beschriebenen Varianten vollinhaltlich auf die Ausführungen zum ersten Ausführungsbeispiel Bezug genommen wird.

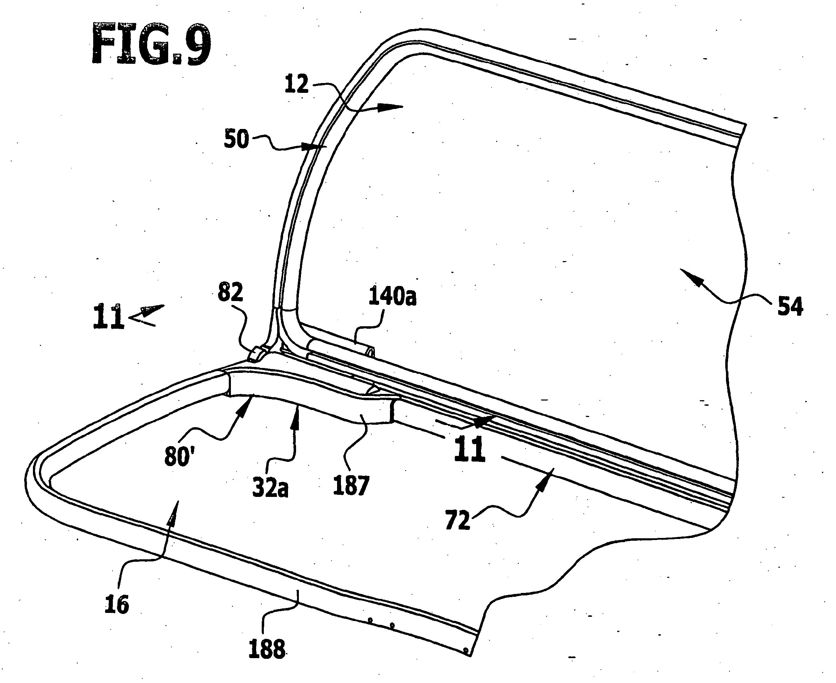

Bei einem vierten Ausführungsbeispiel, dargestellt in den Fig. 9 bis 11, sind diejenigen Teile, die mit den entsprechenden Teilen der voranstehenden Ausführungsbeispiele identisch sind, mit denselben Bezugszeichen versehen, so daß hinsichtlich deren Beschreibung auf die Ausführungen zu den voranstehenden Ausführungsbeispielen vollinhaltlich Bezug genommen wird.

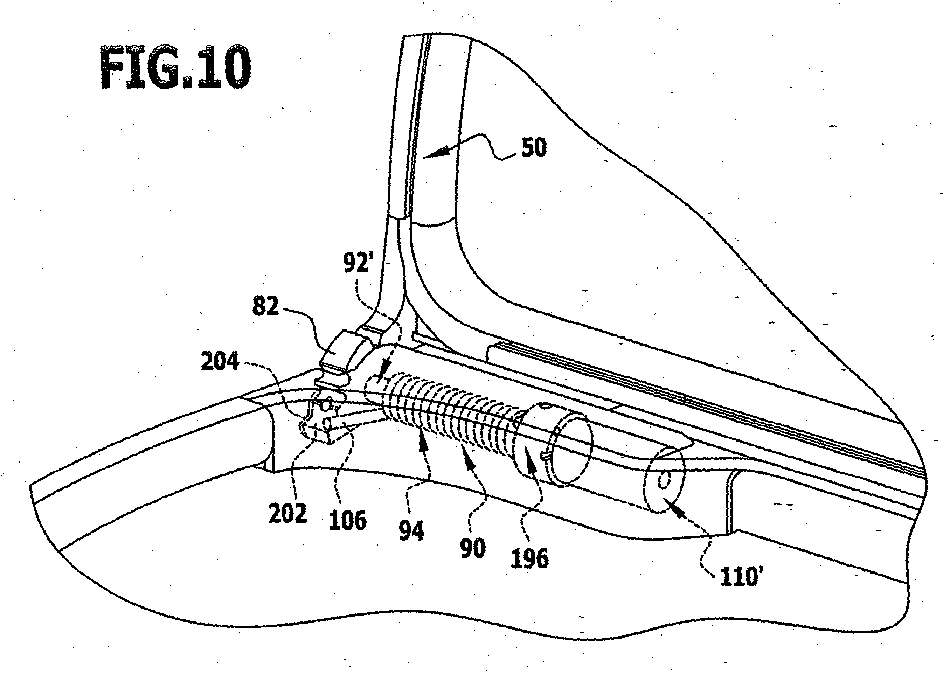

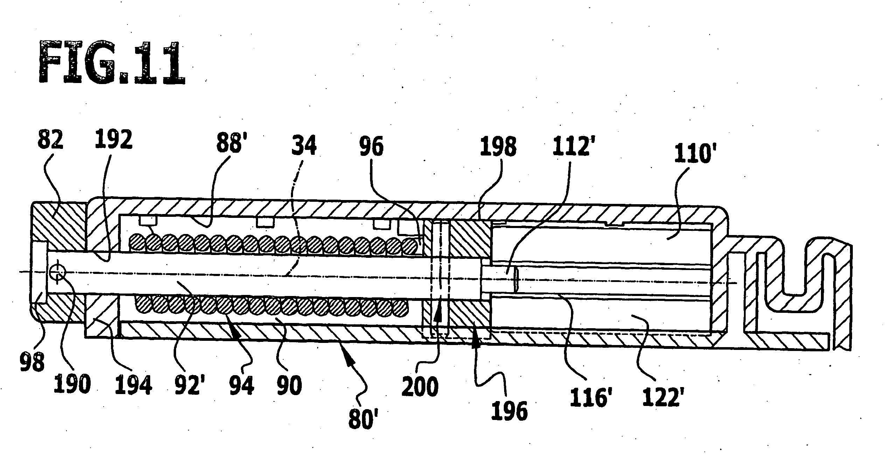

Im Gegensatz zu den voranstehenden Ausführungsbeispielen ist der Lagerkörper 80' an einem der Abdeckungsteile 72 gehalten, insbesondere in einem Eckbereich 187 eines Rahmens 188 des jeweiligen Abdeckungsteils integriert, und wirkt mit einem Lagerflansch 82 zusammen, welcher an dem Windschottrahmen 50 angeordnet ist, wie in Fig. 10 und 11 dargestellt.

In gleicher Weise wie beim ersten Ausführungsbeispiel ist der Lagerflansch 82 drehfest mit dem Kopf 98 des Lagerzapfens 92 verbunden, beispielsweise mittels eines den Kopf 98 und den Lagerflansch 82 durchsetzenden Stifts 190.

Der Lagerzapfen 92 ist unmittelbar neben dem Lagerflansch 82 in einem Durchbruch 192 einer Seitenwand 194 des Lagergehäuses 80' gelagert und durchsetzt die Ausnehmung 88' in dem Lagerkörper 80' bis zu einem Verbindungsstück 196, welches seinerseits in der Ausnehmung 88' im Lagerkörper 80' drehbar gelagert ist, und zwar durch drehbare Lagerung von dessen Mantelfläche 198.

Das Verbindungsstück 196 ist beispielsweise ebenfalls über einen Stift 200 drehfest mit dem Lagerzapfen 92' verbunden und dient zur Aufnahme des ersten Endes 96 der Torsionsfeder 94, während das zweite Ende 106 der Torsionsfeder, wie in Fig. 10 dargestellt, in dem Lagerkörper 80' festgelegt ist.

Darüber hinaus ist der Lagerzapfen 92' noch mittels des Formschlußelements 112' mit der Antriebswelle 116 des Dämpfungselements 110' verbunden, dessen Gehäuse 122' auf einer der Torsionsfeder 94 gegenüberliegenden Seite des Verbindungsstücks 196 in der Ausnehmung 88' innerhalb des Lagerkörpers 80' drehfest aufgenommen ist. Es ist aber auch denkbar, die Antriebswelle 116' drehfest mit dem Verbindungsstück 196 zu verbinden.

Durch das Verschwenken des Windschotts 12 von der wirksamen Stellung in die unwirksame Stellung erfolgt somit ein Verschwenken des Lagerflansches 82 und mit diesem ein Verschwenken des Lagerzapfens 92' um die Achse 34, wodurch über das Verbindungsstück 196 auf das erste Ende 96 der Torsionsfeder 94 eine Torsion wirkt, die mit ihrem zweiten Ende 106 drehfest in dem Lagerkörper 80' gelagert ist.

Dadurch erfolgt eine für das Aufstellen des Windschotts 12 erforderliche Speicherung von Energie in der Torsionsfeder 94.

Gleichzeitig erfolgt ein Drehen der Antriebswelle 116' des Dämpfungselements 110', welches sich beim Überführen des Windschotts 12 von der wirksamen Stellung in die unwirksame Stellung im wesentlichen nicht auswirkt.

Eine Fixierung des Windschotts 12 in der unwirksamen Stellung kann in beliebiger Art und Weise erfolgen, beispielsweise entsprechend einem der Ausführungsbeispiele 1 bis 3.

Nach Lösen der Fixiereinrichtung 130 bewirkt die in der Torsionsfeder 94 gespeicherte Energie, daß das erste Ende 96 auf das Verbindungsstück 196 wirkt und damit den Lagerzapfen 92' dreht, der seinerseits auf den Lagerflansch 82 einwirkt und somit das Windschott 12 um die Achse 34 verschwenkt.

Die von der Torsionsfeder 94 bewirkte Drehbewegung wird dabei durch das Dämpfungselement 110' gedämpft, das aufgrund der Verbindung zwischen dem Formschlußelement 112' und der Antriebswelle 116' mitgedreht wird.

Durch dieses Dämpfungselement 110' erfolgt eine langsame Schwenkbewegung des Windschotts 12 von der unwirksamen Stellung in die wirksame Stellung, das heißt, das Windschott 12 richtet sich selbst von der unwirksamen Stellung in die wirksame Stellung auf, so lange, bis ein an dem Lagerflansch 82 vorgesehenes Anschlagelement 202 an einem entsprechenden Anschlagelement 204 der Abdeckung 16 zur Anlage kommt.

Aufgrund der selbst in der wirksamen Stellung des Windschotts 12 noch vorgespannten Torsionsfeder 94 hält diese das Windschott 12 in seiner wirksamen Stellung, dadurch, daß es das Anschlagelement 202 ständig an dem Anschlagelement 204 in Anlage hält.

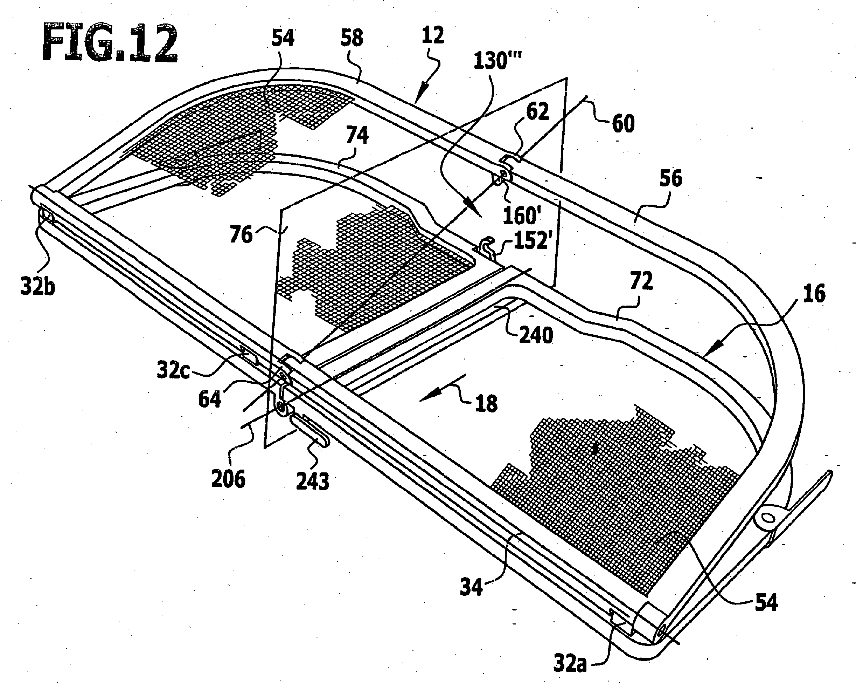

Bei einem fünften Ausführungsbeispiel einer erfindungsgemäßen Windstopeinrichtung, dargestellt in Fig. 12, umfaßt das Windschott 12 in gleicher Weise wie beim ersten Ausführungsbeispiel zwei Rahmenteile 56 und 58, die um die Schwenkachse 60 mittels der Scharniere 62 und 64 relativ zueinander verschwenkbar sind, wie bereits im Zusammenhang mit Fig. 1 und 3 des ersten Ausführungsbeispiels im Einzelnen beschrieben.

Ferner ist eines der Rahmenteile 56, 58, mittels der Gelenke 32a, 32b, und 32c um die Achse 34 an dem Abdeckungsteil 72 schwenkbar gelagert.

Dabei ist beispielsweise das Rahmenteil 58 an dem Abdeckungsteil 72 über die Gelenke 32b und 32c um die Achse 34 schwenkbar gelagert, wobei die Gelenke 32b und 32c auf gegenüberliegenden Seiten des Rahmenteils 58 angeordnet sind, so dass insgesamt eine dauerhaft bestehende schwenkbare Lagerung des Rahmenteils 58 an dem Abdeckungsteil 74 mittels der Gelenke 32b und 32c besteht.

Zusätzlich ist noch ein lösbares Gelenk 32c vorgesehen, mit welchem das Rahmenteil 56 im nicht gelösten Zustand schwenkbar an dem Abdeckungsteil 72 gelagert ist. Im gelösten Zustand des Gelenks 32a sind dann das Abdeckungsteil 72 und das Rahmenteil 56 voneinander trennbar.

Zusätzlich zur Schwenkbarkeit der Rahmenteile 56 und 58 um die Schwenkachse 60 relativ zueinander, sind die Abdeckungsteile 72 und 74 um eine Achse 206 verschwenkbar, jedoch erst nach Lösen des lösbaren Gelenks 32a, so dass das Abdeckungsteil 72 um die Achse 206 von unten, das heißt einer dem Windschott 12 abgewandten Seite gegen das Abdeckungsteil 72 schwenkbar ist.

Hierzu sind die beiden Abdeckungsteile 72 und 74 ihrerseits aneinander mittels Gelenken 210 gelagert,

Eine derartige Faltung einer Windstopeinrichtung ist beispielsweise in der europäischen Patentanmeldung 01 124 855.6 beschrieben.

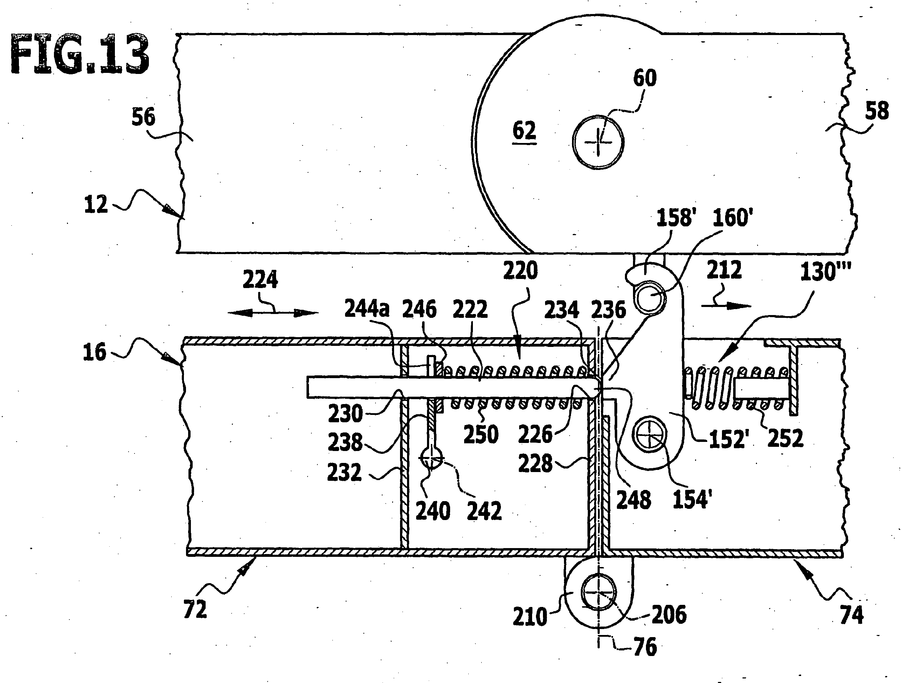

Um zu verhindern, daß sich das Windschott 12 mit den Rahmenteilen 56 und 58 bei einem Antrieb entsprechend den ersten vier Ausführungsbeispielen von seiner unwirksamen Stellung in seine wirksame Stellung selbsttätig bewegt, ist in dem Abdeckungsteil 74, wie in Fig. 13 dargestellt, eine Fixiereinrichtung 130"' vorgesehen, welche als Sperrelement einen Schwenkriegel 152' umfaßt, der um eine Achse 154' schwenkbar in dem Abdeckungsteil 74 gelagert ist und mit seiner Riegelnase 158' zum Fixieren des Windschotts 12 die an dem Rahmenteil 58 angeordnete Riegelaufnahme 160' hintergreift.

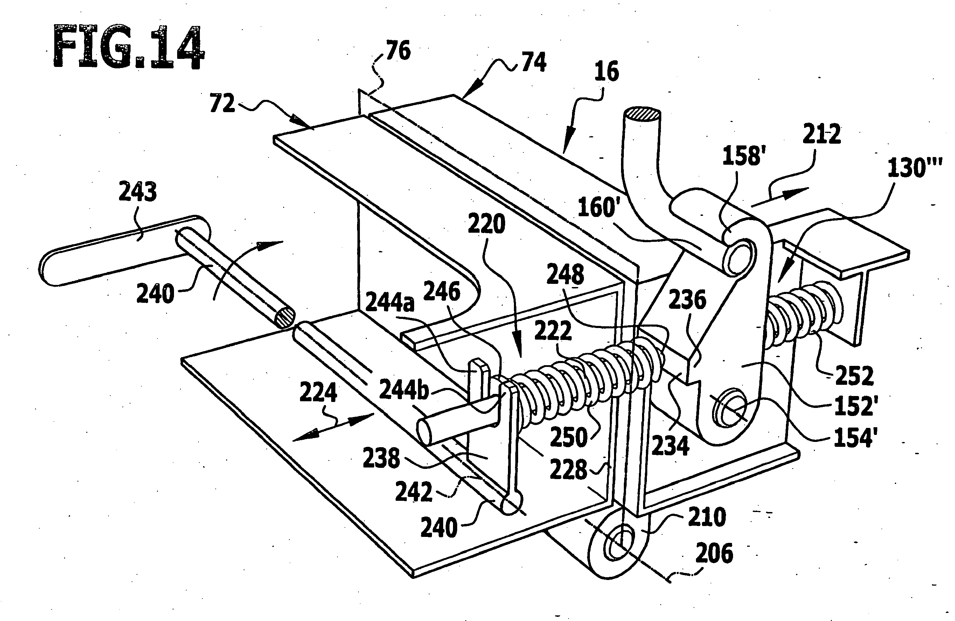

Um den Schwenkriegel 152' von seiner in Fig. 13 und 14 dargestellten Sperrstellung oder verriegelnden Stellung in Richtung 212 zu bewegen und damit die Riegelnase 158' mit der Riegelaufnahme 160' außer Eingriff zu bringen, ist es denkbar, diesen direkt manuell zu betätigen, beispielsweise über eine den dem Schwenkriegel 152' angeformte Nase.

Bei der in Fig. 12 bis 16 dargestellten Ausführungsform ist eine als Ganzes mit 220 bezeichnete Betätigungseinrichtung vorgesehen, welche nicht in demselben, sondern im jeweils anderen Abdeckungsteil, das heißt in diesem Fall im Abdeckungsteil 72 angeordnet ist.

Die Betätigungseinrichtung 220 umfaßt einen Betätigungsschieber 222, welcher in dem Abdeckungsteil 72 in, einer Verschieberichtung 224 verschiebbar gelagert ist, beispielsweise dadurch, daß dieser Betätigungsschieber 222 zum einen eine Öffnung 226 in einer dem Abdeckungsteil 74 zugewandt liegenden Seitenwand 228 durchsetzt und zum anderen dadurch, daß der Betätigungsschieber 222 eine Öffnung 230 in einer Zwischenwand 232 durchsetzt, die beispielsweise in dem Rahmen 188 des Abdeckungsteils 72 liegt.

Im einfachsten Fall ist der Betätigungsschieber 222 als Betätigungsbolzen ausgebildet und die Öffnungen 226 und 230 sind Bohrungen, die den Betätigungsschieber 222 in der Verschieberichtung 224, welche ungefähr parallel zu der Achse 34 verläuft, verschiebbar lagern.

Der Betätigungsschieber 222 ist dabei, wie in Fig. 13 und Fig. 14 dargestellt, so angeordnet, daß dieser in der Lage ist, bei an der Karosserie 10 montierter Windstopeinrichtung über die Trennebene 76 hinweg zu greifen und eine Druckfläche 234 an einer Betätigungsnase 236 des Schwenkriegels 152' zu beaufschlagen, um diesen so zu schwenken, daß dessen Riegelnase 158 die Riegelaufnahme 160 freigibt.

Ein Verschieben des Betätigungsschiebers 222 könnte einerseits durch direkte manuelle Einwirkung auf diesen erfolgen.

Eine vorteilhafte Lösung sieht vor, daß der Betätigungsschieber 222, wie in Fig. 13 und 14 dargestellt, durch eine Betätigungsgabel 238 bewegbar ist, welche auf einer Welle 240 sitzt, die ihrerseits um eine Achse 242 drehbar in dem Abdeckungsteil 72 gelagert ist.

Die Welle 240 erstreckt sich vorzugsweise bis zu einem Betätigungshebel 244, welcher, wie in Fig. 12 dargestellt, auf einer einem Fahrer zugewandten Seite des Abdeckungsteils 72 angeordnet ist, wobei die dem Fahrer zugewandte Seite des Abdeckungsteils 72 die Seite ist, auf welcher auch die Achse 34 verläuft, um die das Windschott 12 relativ zur Abdeckung 16 zwischen der unwirksamen und der wirksamen Stellung verschwenkbar ist.

Bei der erfindungsgemäßen Betätigungseinrichtung 220 wirkt nun die Betätigungsgabel 238 mit ihren Gabelfingern 244a und 244b auf einen fest mit dem Betätigungsschieber 222 verbundenen Ring 246, wenn der Betätigungsschieber 222 in Richtung des Schwenkriegels 152' verschoben werden soll, um die Druckfläche 234 an der Betätigungsnase 236 desselben mit einem Betätigungskopf 248 zu beaufschlagen.

Um andererseits den Betätigungsschieber 222 in seiner mit dem Betätigungskopf 248 die Druckfläche 234 nicht beaufschlagenden Stellung zu halten, ist, wie in Fig. 12 und 14 dargestellt, eine Druckfeder 250 vorgesehen, welche sich einerseits an der Seitenwand 228 abstützt und dabei auf einer den Gabelfingern 244a, b gegenüberliegenden Seite des Rings 246 wirkt, und somit den Betätigungsschieber 222 in seine den Schwenkriegel 152' nicht betätigende Position verschiebt, in welcher beispielsweise der Ring 246 die Gabelfinger 244a, b der Betätigungsgabel 238 beaufschlagt und diese um die Achse 242 derart verschwenkt, daß die Gabelfinger 244a, b an der Zwischenwand 232 anliegt, die in diesem Fall gleichzeitig als Anschlag für das Festlegen der Position des Betätigungsschiebers 222 dient, in welcher dieser den Schwenkriegel 152' nicht beaufschlagt.

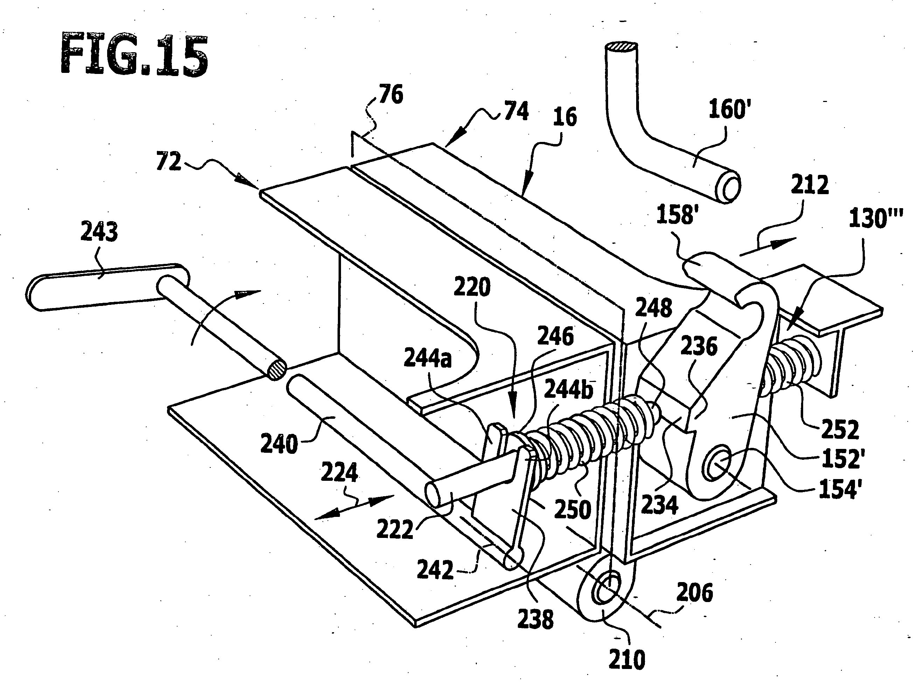

Durch kurzzeitiges Einwirken auf den Betätigungshebel 243 besteht nun die Möglichkeit, mit dem Betätigungsschieber 222 den Schwenkriegel 152' in seine die Riegelaufnahme 160 freigebende Stellung oder Lösestellung zu bewegen, so daß, wie in Fig. 15 dargestellt, die Riegelaufnahme 160' freigegeben wird, um dem Windschott 12 zu erlauben, sich unter Wirkung des Antriebs 90 von der unwirksamen in die wirksame Stellung zu bewegen.

Um andererseits auch den Schwenkriegel 152' definiert in seiner verriegelnden Stellung zu halten, ist auch im Abdeckungsteil 74 eine Druckfeder 252 vorgesehen, welche den Schwenkriegel 152' entsprechend beaufschlagt.

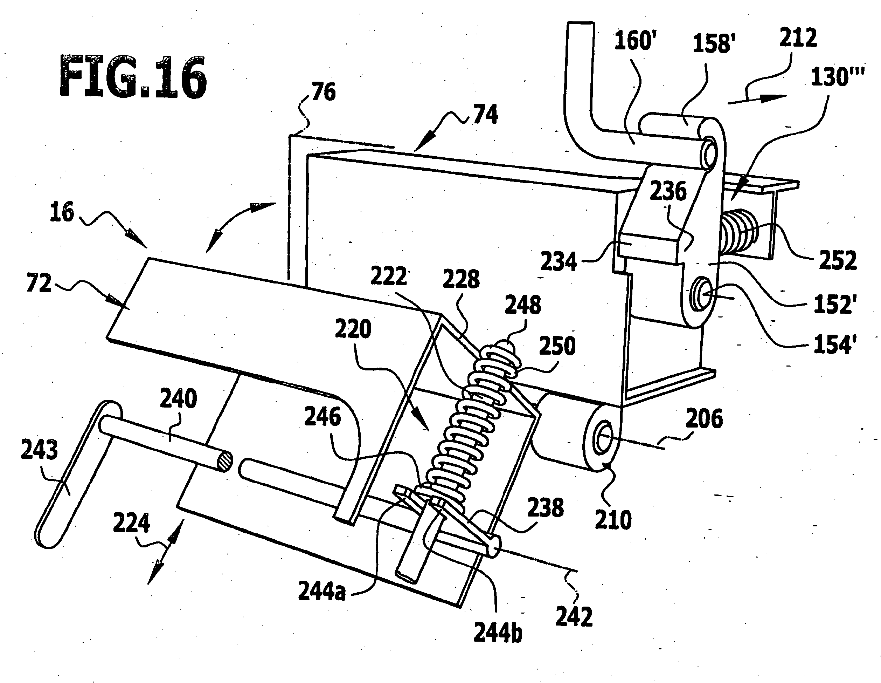

Die Tatsache, daß einerseits nun die Fixiereinrichtung 130" im einen Abdeckungsteil, beispielsweise im Abdeckungsteil 74, angeordnet ist und die Betätigungseinrichtung 220 im anderen Abdeckungsteil, nämlich beispielsweise im Abdeckungsteil 72, angeordnet ist, hat den Vorteil, daß, wie in Fig. 16 dargestellt, beim Verschwenken der Abdeckungsteile 72, 74 gegeneinander um die Achse 206 der Betätigungsschieber 222 mit seinem Betätigungskopf 248 so weit von der Druckfläche 234 des Schwenkriegels 152' weg bewegt wird, daß selbst ein Betätigen des Betätigungshebels 243 nicht dazu führen kann, daß der Betätigungskopf 248 die Druckfläche 234 beaufschlagt und damit nicht in der Lage ist, die Fixierung des Rahmenteils 58 am Abdeckungsteil 74 zu lösen, so daß das Rahmenteil 58 in seinem auf dem Abdeckungsteil 74 liegenden Zustand einerseits durch die Gelenke 32b und 32c und andererseits durch die Fixiereinrichtung 130"' fixiert bleibt, auch wenn das Abdeckungsteil 72 von unten gegen das Abdeckungsteil 74 und das Rahmenteil 56 von oben gegen das Rahmenteil 58 geklappt werden.

Eine Betätigung des Schwenkriegels 152' über den Betätigungshebel 243 ist erst dann wieder möglich, wenn das Abdeckungsteil 72 relativ zum Abdeckungsteil 74 in seiner aufgeklappten Stellung steht, in welcher die Abdeckungsteile 72 und 74 den Teilbereich 20 der Fahrgastraumöffnung 22 abdecken. Somit ist die Fixierung des Rahmenteils 58 an dem Abdeckungsteil 74 stets dann gegen ein unbeabsichtigtes Lösen gesichert, wenn das Abdeckungsteil 72 gegenüber dem Abdeckungsteil 74 verschwenkt wird.

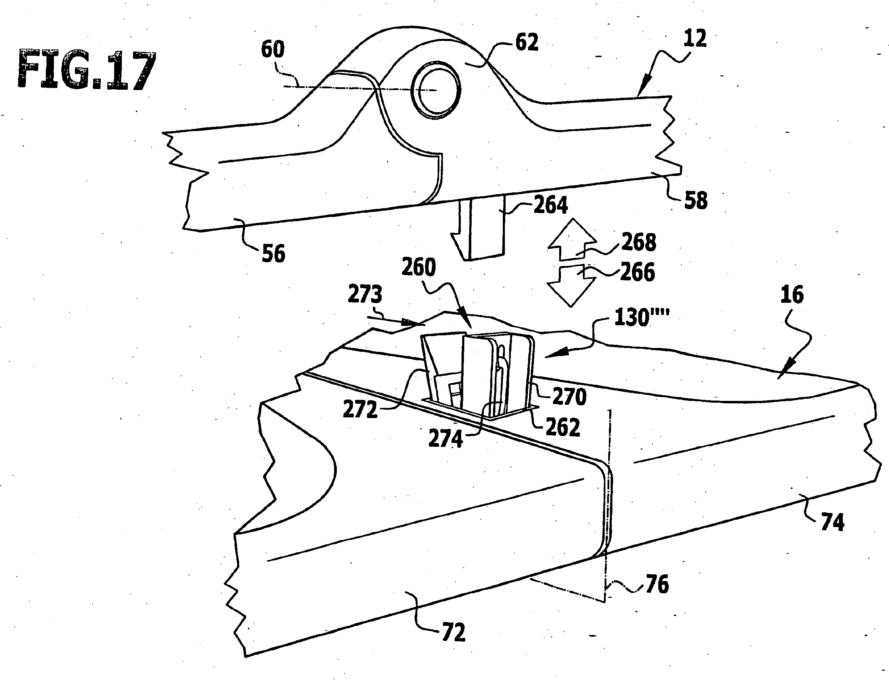

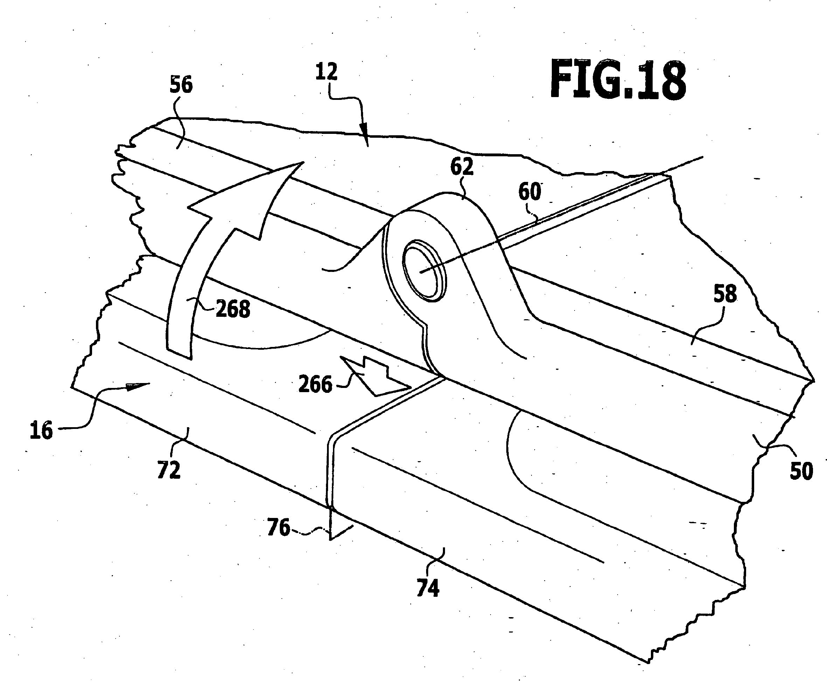

Bei einem sechsten Ausführungsbeispiel einer erfindungsgemäßen Windstopeinrichtung, dargestellt in Fig. 17 und 18, ist an dem Abdeckungsteil 74 eine als Ganzes mit 130"" bezeichnete Fixiereinrichtung vorgesehen, welche nahe der Trennebene 76 angeordnet ist.

Die Fixiereinrichtung 130"" ist dabei als Fangeinrichtung ausgebildet, welche einen Fangschieber 260 umfaßt, der in einem im Abdeckungsteil 74 vorgesehenen Fangschiebergehäuse 262 gelagert ist und dazu dient, ein Einfangelement 264, welches am Rahmenteil 58 angeordnet ist, relativ zum Abdeckungsteil 74 festzulegen oder freizugeben.

Hierzu ist das am Rahmenteil 58 vorgesehene Einfangelement 264 in einer Einschwenkrichtung 266 auf die Fangeinrichtung 130"" zu bewegbar, greift kurz vor Erreichen der unwirksamen Stellung des Windschotts 12 in den Fangschieber 260 ein und wird bei weiterem Verschwenken des Windschotts 12 in der Einschwenkrichtung 266 zum Erreichen der unwirksamen Stellung desselben mitsamt dem Fangschieber 260 von seiner in Fig. 17 dargestellten Lösestellung weiter in der Einschwenkrichtung 266 bewegt, so daß der Fangschieber 260 in das Fangschiebergehäuse 262 eintritt und bei Erreichen der unwirksamen Stellung des Windschotts 12 selbst eine Sperrstellung erreicht, in welcher der Fangschieber 260 daran gehindert wird, sich in einer Ausschwenkrichtung 268 zu bewegen und sich somit aus dem Fangschiebergehäuse 262 herauszubewegen.

Beim Einfahren des Fangschiebers 260 in das Fangschiebergehäuse 262 erfaßt der Fangschieber 260 das Einfangelement 264 und geht dabei in seine das Einfangelement 264 festlegende Stellung über, so daß in der Sperrstellung des Fangschiebers 260 das Einfangelement 264 nicht mehr die Möglichkeit hat, sich vom Fangschieber 260 zu lösen. In diesem Fall ist das Windschott 12, wie in Fig. 18 dargestellt, mit seinen Rahmenteilen 56 und 58 relativ zur Abdeckung 14 mit den Abdeckungsteilen 72 und 74 festgelegt, wobei das Windschott 12 in seiner unwirksamen Stellung steht.

Ausgehend von der unwirksamen Stellung des Windschotts 12, in welcher der Fangschieber 260 das Einfangelement 264 festhält, läßt sich durch weiteres Bewegen des Windschotts 12 in der Einschwenkrichtung 266 der Fangschieber 260 weiter in das Fangschiebergehäuse 262 hinein bewegen, verläßt dabei seine Sperrstellung und läßt sich dann angetrieben durch den ständig auf das Windschott 12 einwirkenden Antrieb 90 mitsamt dem Einfangelement 264 in einer Ausschwenkrichtung 268 aus dem Fangschiebergehäuse 262 heraus in seine Lösestellung bewegen, in welcher der Fangschieber 260 das Einfangelement 264 freigibt und selbst in dieser Stellung stehen bleibt, so daß dann insgesamt das Windschott 12 unter Einwirkung des Antriebs 90 von seiner unwirksamen Stellung in seine wirksame Stellung übergehen kann.

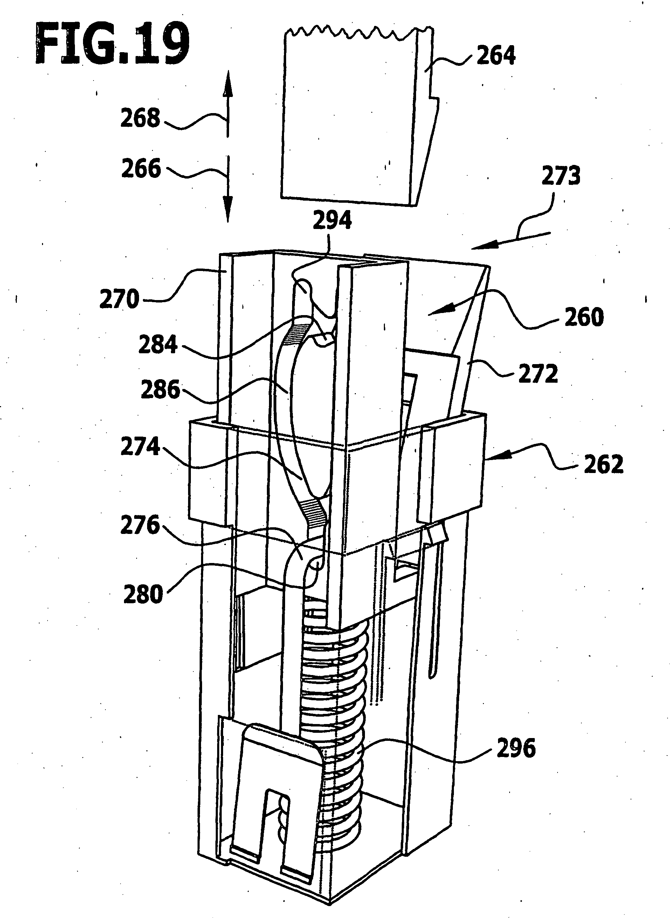

Wie in Fig. 19 im Einzelnen dargestellt, umfaßt der Fangschieber 260 einen Führungskörper 270 sowie ein bewegbar mit dem Führungskörper 270 verbundenes Fängerelement 272, die in der Einschwenkrichtung 266 sowie entgegengesetzt zu dieser in der Ausschwenkrichtung 268 relativ zum Fangschiebergehäuse 262 gemeinsam bewegbar sind.

Außerdem ist das Fängerelement 272 quer zur Einschwenkrichtung 266 und zur Ausschwenkrichtung 268 in einer Fangrichtung 273 auf den Führungskörper 70 zu in eine das Einfangelement 264 festlegende Stellung bewegbar oder von diesem weg entgegengesetzt zur Fangrichtung 273 in eine das Einfangelement 264 freigebende Stellung bewegbar, die in Fig. 17 und Fig. 19 dargestellt ist.

Ferner ist der Führungskörper 270 mit einer Kulissenbahn 274 versehen, in welcher ein am Fangschiebergehäuse 262 gehaltener Bahnfolger 276 durch Verschieben des Führungskörpers 270 in der Einschwenkrichtung 266 oder der Ausschwenkrichtung 268 bewegbar ist.

Die Kulissenbahn 274 umfasst einen Basisabschnitt 280, an welchen sich ein aufsteigender Abschnitt 282 anschließt, der in einen Halteabschnitt 284 übergeht, und der Halteabschnitt 284 geht über in einen absteigenden Abschnitt 286, welcher wieder in den Basisabschnitt 280 einmündet.

Ferner sind am Übergang vom aufsteigenden Abschnitt 282 in den Halteabschnitt 284 sowie beim Übergang von dem Halteabschnitt 284 in den absteigenden Abschnitt 286 jeweils Umlenkabschnitte 292 und 294 vorgesehen, wobei der Umlenkabschnitt 292 den Bahnfolger 276 dann, wenn sich dieser im aufsteigenden Abschnitt 282 bewegt, am Ende desselben in den Halteabschnitt 284 umlenkt und der Umlenkabschnitt den Bahnfolger dann, wenn sich dieser im Halteabschnitt 284 bewegt, in den absteigenden Abschnitt 286 umlenkt.

In der in Einschwenkrichtung 266 in das Fangschiebergehäuse 262 eingefahrenen Stellung des Fangschiebers 260 steht der Bahnfolger 276 in dem Halteabschnitt 284 der Kulissenbahn 274 und hindert den Fangschieber 260 durch Sperren einer Bewegung des Führungskörpers 270 daran, diese Stellung zu verlassen, so dass der Führungskörper 270 und mit diesem auch der Fangschieber 260 in einer Sperrstellung stehen, in welcher außerdem das Fängerelement 272 auf den Führungskörper 270 zu bewegt in seiner das Einfangelement 264 festlegenden Stellung steht und beispielsweise in dieser Stellung einen Vorsprung des Einfangelements 264 hintergreift. Die Position des Fängerelements 272 relativ zum Führungskörper 270 wird dabei durch das Fangschiebergehäuse 262 festgelegt, welche das Fängerelement 272 durch Einwirkung einer entsprechenden Kulisse am Fangschiebergehäuse 262 in der Sperrstellung des Fangschiebers 260 in einer auf den Führungskörper 270 zu bewegten Stellung hält.

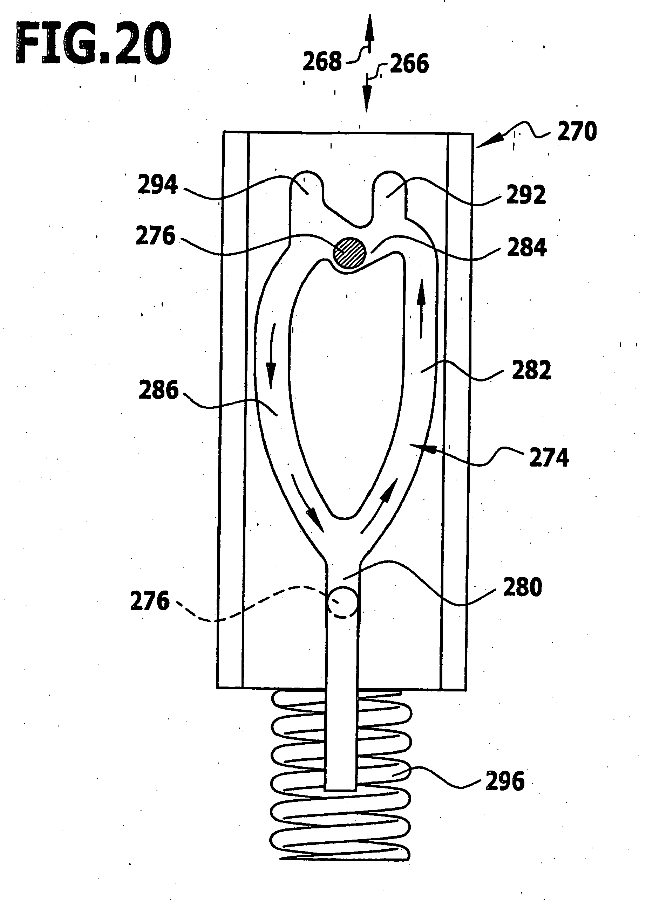

Wird nun der gesamte Fangschieber 260 in der Einschwenkrichtung 266 beaufschlagt, so führt dies dazu, daß auch der Führungskörper 270 in dieser Richtung bewegt wird und sich somit der Bahnfolger 276 in den Umlenkabschnitt 294 hineinbewegt, welcher bei einem nachfolgenden Loslassen der Beaufschlagung des Fangschiebers 260 und somit des Führungskörpers 270 und somit aufgrund der Bewegung des Windschotts 12 mit dem Einfangelement 264 durch den Antrieb 90 in der Ausschwenkrichtung 268 in dem absteigenden Abschnitt 286 entlang gleiten kann, bis zum Basisabschnitt 280, in welchem der Bahnfolger 276 letztlich dann die in Fig. 20 gestrichelte Darstellung einnimmt. Damit haben der Führungskörper 270 und somit auch der Fangschieber 260 die Möglichkeit, in der Ausschwenkrichtung 268 sich aus dem Fangschiebergehäuse 262 herauszubewegen, wobei gleichzeitig durch Einwirkung einer entsprechenden Kulisse am Fangschiebergehäuse 262 gegebenenfalls unterstützt durch eine Feder ein Bewegen des Fängerelements 272 in die das Einfangelement 264 freigebende Stellung erfolgt, so daß dieses nicht mehr das Einfangelement 264 hintergreifen kann.

Somit hat das Einfangelement 264 die Möglichkeit, sich frei vom Fangschieber 260 in der Ausschwenkrichtung 268 zu bewegen, so daß letztendlich das Windschott 12 unter Einwirkung des Antriebs 90 von der unwirksamen Stellung in die wirksame Stellung übergeht.

Dabei steht der Fangschieber 260 in seiner Lösestellung, wie bereits in Fig. 17 dargestellt, über das Fangschiebergehäuse 262 in der Ausschwenkrichtung 268 über.

Bei einem erneuten Bewegen des Windschotts 12 in seine unwirksame Stellung wird das Einfangelement 264 in Richtung des Fangschiebers 260 bewegt und greift kurz vor Erreichen der unwirksamen Stellung des Windschotts 12 in den Fangschieber 260 dergestalt ein, daß das Einfangelement 264 zwischen dem Führungskörper 270 und dem Fängerelement 272 zu liegen kommt.

Eine weitere Verschiebung des Fangschiebers 260 in der Einschwenkrichtung 266, aufgrund der entsprechenden Bewegung des Windschotts 12, hat zur Folge, daß sich der Fangschieber 260 und mit diesem das Führungselement 270 von der in Fig. 17 dargestellten Lösestellung ausgehend, in das Fangschiebergehäuse 262 hineinbewegen, wobei in diesem Fall der Bahnfolger 266 von dem Basisabschnitt 280 über den aufsteigenden Abschnitt 284 den Umlenkabschnitt 292 erreicht, und nach Beendigung der Bewegung des Windschotts 12 in der Einschwenkrichtung 266 durch Loslassen desselben aufgrund des Umlenkabschnitts 292 bei einer geringfügigen Bewegung in der Ausschwenkrichtung 268 in den Halteabschnitt 284 übergeht, so daß wiederum der Fangschieber 260 in dem Fangschiebergehäuse 262 in einer Sperrstellung steht und dabei durch den Bahnfolger 276, der auf das Führungselement 270 einwirkt, in dieser Stellung blockiert ist. Außerdem steht - wie bereits beschrieben - in der Sperrstellung das Fängerelement 272 in seiner das Einfangelement 264 festlegenden Stellung, so daß das Windschott 12 wieder in seiner unwirksamen Stellung festgehalten wird.

Erst ein erneutes Beaufschlagen des Fangschiebers 260 und somit des Führungskörpers 270 in Richtung der Einschwenkrichtung 266 eröffnet wiederum die Möglichkeit eines Übergangs des Bahnfolgers 276 von dem Halteabschnitt 284 in den Umlenkabschnitt 294 und eröffnet somit die Chance, daß der Führungskörper 270 des Fangschiebers 260 nach Loslassen des Windschotts 12 die Möglichkeit hat, über den absteigenden Abschnitt 286 in den Basisabschnitt 280 überzugehen.

Um den Fangschieber 260 stets in Richtung der Ausschwenkrichtung 268 beaufschlagt zu halten, ist eine Druckfeder 296 vorgesehen, welche auf den Fangschieber 260 einwirkt und diesen stets in Richtung seiner Lösestellung, in welcher das Fängerelement 272 in seiner das Einfangelement 264 freigebenden Stellung steht, beaufschlagt, und somit auch einer manuellen Einwirkung über das Windschott 12 und das Einfangelement 264 auf das Fangelement 260 in Einschwenkrichtung 266 entgegenwirkt und stets den Fangschieber 260 so beaufschlagt, daß dieser die Tendenz hat, in seine Lösestellung überzugehen, die lediglich in der Sperrstellung durch den Bahnfolger 276 verhindert wird.

Hinsichtlich der übrigen Ausbildung der Windstopeinrichtung wurden für dieselben Teile dieselben Bezugszeichen verwendet, so daß vollinhaltlich auf die Ausführungen zu den voranstehenden Ausführungsbeispielen Bezug genommen werden kann.

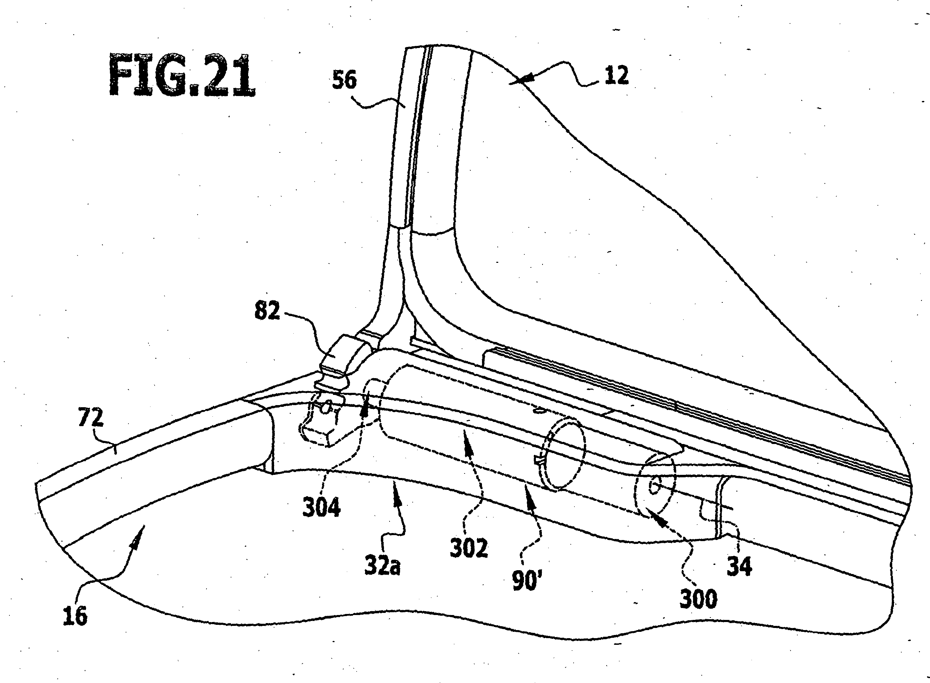

Bei einem siebten Ausführungsbeispiel, dargestellt in Fig. 21, sind diejenige Teile, die mit den entsprechenden Teilen des ersten Ausführungsbeispiels identisch sind, mit denselben Bezugszeichen versehen, so daß hinsichtlich deren Beschreibung vollinhaltlich auf die Ausführungen zum ersten Ausführungsbeispiel Bezug genommen wird.

Im Gegensatz zum ersten Ausführungsbeispiel ist bei dem vierten Ausführungsbeispiel der Antrieb 90' zum Verschwenken des Windschotts 12 nicht als Federantrieb ausgebildet, sondern dieser umfaßt einen Elektromotor 300, welcher über ein Getriebe 302 eine Welle 304 antreibt, die in dem Lagerflansch 82 drehfest festgelegt ist.

Beim Bestromen des Elektromotors 300 dreht sich somit die Welle 304 und somit der Windschottrahmen 50 um die koaxial zu einer Achse der Welle 304 verlaufende Achse 34 und somit läßt sich durch Bestromen des Elektromotors 300 der Windschottrahmen 50 und somit das Windschott 12 um die Achse 34 verschwenken, wobei aufgrund des Getriebes 302 das Windschott 12 in der jeweiligen Stellung stehen bleibt, in welcher eine Bestromung des Elektromotors 300 unterbrochen wird.

Die Stabilisierung des Windschotts 12 in der jeweiligen Stellung läßt sich ferner noch dadurch verbessern, daß das Getriebe 302 ein selbsthemmendes Getriebe ist und somit die einmal vom Elektromotor 300 bewirkte Stellung so lange aufrecht erhalten bleibt, bis der Elektromotor 300 wiederum das Getriebe 302 antreibt, um das Windschott 12 relativ zur Abdeckung 16 zu verschwenken.

Somit können bei diesem sechsten Ausführungsbeispiel die im Zusammenhang mit den ersten drei Ausführungsbeispielen genannten Fixiereinrichtungen 130, 130', 130", 130"' und 130"" entfallen.

Die Ansteuerung des Elektromotors 300 erfolgt vorzugsweise über eine an der Windstopeinrichtung vorgesehene oder über eine fahrzeugseitig vorgesehene Steuerung für die Windstopeinrichtung.

Diese Steuerung ist zweckmäßigerweise noch mit einer Drehmomenterkennung versehen, welche es erlaubt, beim Auftreten eine die Bewegung des Windschotts hemmenden Widerstands die Bewegung des Windschotts zu unterbrechen, da dann beispielsweise die Gefahr besteht, daß sich eine Bedienungsperson verletzen könnte, beispielsweise dadurch, daß Körperteile derselben eingeklemmt werden, oder die Gefahr einer Beschädigung des elektrischen Antriebs besteht.

Im übrigen erfolgt die Verbindung der erfindungsgemäßen Windschotteinrichtung mit der Fahrzeugkarosserie in gleicher Weise wie im Zusammenhang mit dem ersten oder vierten Ausführungsbeispiel beschrieben.

## Patentansprüche

1. Windstopeinrichtung für Kraftfahrzeuge, insbesondere Cabriofahrzeuge, umfassend eine in Höhe einer Gürtellinie (14) einer Karosserie (10) angeordnete Abdeckung (16) für einen Teilbereich (20) einer Fahrgastraumöffnung (22) der Karosserie (10), ein mit der Abdeckung (16) über Gelenke (32) verbundenes Windschott (12), welches von einer auf der Abdeckung (16) aufliegenden unwirksamen Stellung in eine sich über die Gürtellinie (14) der Karosserie (10) erhebende wirksame Stellung verschwenkbar ist, in welcher sich das Windschott (12) quer zur Abdeckung (16) erstreckt, und einen Antrieb (90), mit welchem das Windschott (12) zumindest von der unwirksamen Stellung in die wirksame Stellung bewegbar ist,
**dadurch gekennzeichnet, dass** der Antrieb (90) mindestens einem Gelenk (32) zugeordnet ist und dass der Antrieb (90) und das Gelenk (32) eine Einheit bilden.

2. Windstopeinrichtung nach Anspruch 1, **dadurch gekennzeichnet, dass** der Antrieb (90) in einem Lagerkörper (80) des Gelenks (32) integriert ist.

3. Windstopeinrichtung nach Anspruch 2, **dadurch gekennzeichnet, dass** der Lagerkörper (80) in einen Windschottrahmen (50) integriert ist.

4. Windstopeinrichtung nach Anspruch 3, **dadurch gekennzeichnet, dass** der Lagerkörper in einem Eckbereich (86) des Windschottrahmens (50) angeordnet ist.

5. Windstopeinrichtung nach Anspruch 2, **dadurch gekennzeichnet, dass** der Lagerkörper (80') in die Abdeckung (16) integriert ist.

6. Windstopeinrichtung nach Anspruch 5, **dadurch gekennzeichnet, dass** der Lagerkörper (80') in ein Abdeckungsteil (72) integriert ist.

7. Windstopeinrichtung nach Anspruch 6, **dadurch gekennzeichnet, dass** der Lagerkörper (80') in einem Eckbereich (187) des Abdeckungsteils (72) angeordnet ist.

8. Windstopeinrichtung nach einem der voranstehenden Ansprüche, **dadurch gekennzeichnet, dass** der Antrieb (90) einen federelastischen Energiespeicher (94) umfasst.

9. Windstopeinrichtung nach Anspruch 8, **dadurch gekennzeichnet, dass** der federelastische Energiespeicher so ausgebildet ist, dass er in der unwirksamen Stellung des Windschotts (12) die maximale Energie gespeichert hat.

10. Windstopeinrichtung nach Anspruch 8 oder 9, **dadurch gekennzeichnet, dass** der federelastische Energiespeicher (94) in der wirksamen Stellung des Windschotts die minimale Energie gespeichert hat.

11. Windstopeinrichtung nach einem der Ansprüche 8 bis 10, **dadurch gekennzeichnet, dass** der federelastische Energiespeicher eine Torsionsfeder umfasst.

12. Windstopeinrichtung nach einem der voranstehenden Ansprüche, **dadurch gekennzeichnet, dass** dem Antrieb (90) ein Dämpfungselement (110) zugeordnet ist.

13. Windstopeinrichtung nach Anspruch 12, **dadurch gekennzeichnet, dass** das Dämpfungselement (110) mindestens einem der Gelenke (32) zugeordnet ist.

14. Windstopeinrichtung nach Anspruch 13, **dadurch gekennzeichnet, dass** das Dämpfungselement (110) in das jeweilige Gelenk integriert ist.

15. Windstopeinrichtung nach einem der Ansprüche 8 bis 14, **dadurch gekennzeichnet, dass** der federelastische Energiespeicher (94) und das Dämpfungselement (110) demselben Gelenk (32) zugeordnet sind.

16. Windstopeinrichtung nach einem der voranstehenden Ansprüche, **dadurch gekennzeichnet, dass** das Windschott (12) in der unwirksamen Stellung gegenüber der Abdeckung (16) mit einer Fixiereinrichtung (130) fixierbar ist.

17. Windstopeinrichtung nach Anspruch 16, **dadurch gekennzeichnet, dass** die Fixiereinrichtung (130) ein Sperrelement (132, 152, 174, 260) umfasst, das selbsttätig in eine Sperrstellung übergeht und manuell in eine Lösestellung überführbar ist.

18. Windstopeinrichtung nach Anspruch 16 oder 17, **dadurch gekennzeichnet, dass** die Fixiereinrichtung (130) an der Karosserie (10) angeordnet ist.

19. Windstopeinrichtung nach Anspruch 16 oder 17, **dadurch gekennzeichnet, dass** die Fixiereinrichtung (130', 130", 130"', 130"") an der Abdeckung (16) oder dem Windschott (12) angeordnet ist.

20. Windstopeinrichtung nach Anspruch 19, **dadurch gekennzeichnet, dass** die Fixiereinrichtung (130") im Bereich von mindestens einem der Gelenke (32) angeordnet ist.

21. Windstopeinrichtung nach Anspruch 16, **dadurch gekennzeichnet, dass** die Fixiereinrichtung (130"', 130"") an der Abdeckung (16) angeordnet ist.

22. Windstopeinrichtung nach Anspruch 21, **dadurch gekennzeichnet, dass** die Fixiereinrichtung (130", 130"', 130"") an einem der Abdeckungsteile (72, 74) angeordnet ist.

23. Windstopeinrichtung nach einem der Ansprüche 16 bis 22, **dadurch gekennzeichnet, dass** die Fixiereinrichtung (130"') durch eine Betätigungseinrichtung (220) im Sinne eines Lösens der Fixierung betätigbar ist.

24. Windstopeinrichtung nach Anspruch 23, **dadurch gekennzeichnet, dass** die Betätigungseinrichtung (220) an dem jeweils anderen Abdeckungsteil (74, 72) angeordnet ist.

25. Windstopeinrichtung nach Anspruch 24, **dadurch gekennzeichnet, dass** mit der Betätigungseinrichtung (220) in einem aufgeklappten Zustand der Abdeckung (16) über die Trennebene (76) hinweg die Fixiereinrichtung (130) im Sinne eines Lösens betätigbar ist.

26. Windstopeinrichtung nach einem der Ansprüche 23 bis 25, **dadurch gekennzeichnet, dass** nach Verlassen des aufgeklappten Zustandes der Abdeckung (16) die Fixiereinrichtung (130"') mit der Betätigungseinrichtung (220) nicht mehr betätigbar ist.

27. Windstopeinrichtung nach Anspruch 26; **dadurch gekennzeichnet, dass** die Betätigungseinrichtung (220) einen Betätigungskopf (248) aufweist, mit welchem durch ein Hinweggreifen über die Trennebene (76) die Fixiereinrichtung (130"') beaufschlagbar ist.

28. Windstopeinrichtung nach Anspruch 26, **dadurch gekennzeichnet, dass** der Betätigungskopf (248) nach Verlassen des aufgeklappten Zustandes der Abdeckung (16) so weit von der Fixiereinrichtung (130"') entfernt ist, dass diese nicht mehr betätigbar ist.

29. Windstopeinrichtung nach einem der Ansprüche 23 bis 28 **dadurch gekennzeichnet, dass** die Betätigungseinrichtung (220) einen Betätigungshebel (243) aufweist, der fahrerseitig der Abdeckung (16) angeordnet ist.

30. Windstopeinrichtung nach einem der Ansprüche 16 bis 22, **dadurch gekennzeichnet, dass** die Fixiereinrichtung (130"") so ausgebildet ist, dass bei einer Bewegung des Windschotts (12) in einer Einschwenkrichtung (266) die Fixiereinrichtung (130"") in eine Sperrstellung übergeht.

31. Windstopeinrichtung nach Anspruch 30, **dadurch gekennzeichnet, dass** die in der Sperrstellung stehende Fixiereinrichtung (130"") so ausgebildet, dass sie durch eine Bewegung des Windschotts (12) in der Einschwenkrichtung (266) und anschließende Bewegung in einer Ausschwenkrichtung (268) in eine Lösestellung übergeht.

32. Windstopeinrichtung nach Anspruch 30 oder 31, **dadurch gekennzeichnet, dass** die Fixiereinrichtung (130"") als Fangeinrichtung ausgebildet ist, in welcher ein Einfangelement (264) festlegbar ist.

33. Windstopeinrichtung nach Anspruch 32, **dadurch gekennzeichnet, dass** die Fixiereinrichtung (130"") einen Fangschieber (260) umfasst, welcher zwischen einer in der Ausschwenkrichtung (268) aus dem Fangschiebergehäuse (262) ausgefahrenen Lösestellung und einer in der Einschwenkrichtung (266) in das Fangschiebergehäuse 262 eingefahrenen Sperrstellung bewegbar ist.

34. Windstopeinrichtung nach Anspruch 33, **dadurch gekennzeichnet, dass** der Fangschieber (260) einen Führungskörper (270) und ein mit diesem bewegbar verbundenes Fängerelement (272) umfasst, welches in der Sperrstellung in einer das Einfangelement (264) festlegenden Stellung und in der Lösestellung in einer das Einfangelement (264) freigebenden Stellung steht.

35. Windstopeinrichtung nach Anspruch 32 oder 33, **dadurch gekennzeichnet, dass** der Fangschieber (260) durch Einwirkung des Einfangelements (264) zwischen der Sperrstellung und der Lösestellung bewegbar ist.

36. Windstopeinrichtung nach einem der Ansprüche 1 bis 8 und 16 bis 35,
**dadurch gekennzeichnet, dass** der Antrieb (90') als elektrischer Antrieb ausgebildet ist.

37. Windstopeinrichtung nach Anspruch 36, **dadurch gekennzeichnet, dass** der elektrische Antrieb (90') einen elektrischen Antriebsmotor (300) umfasst.

38. Windstopeinrichtung nach Anspruch 37, **dadurch gekennzeichnet, dass** der Antrieb (90') ein von dem elektrischen Antriebsmotor (260) getriebenes Getriebe (302) umfasst.

39. Windstopeinrichtung nach Anspruch 38, **dadurch gekennzeichnet, dass** das Getriebe (302) als selbsthemmendes Getriebe ausgebildet ist.

## Claims

1. Wind stop device for motor vehicles, in particular, convertible vehicles, comprising a cover (16) for a section (20) of a passenger compartment opening (22) of a vehicle body (10), said cover being arranged at the level of a belt line (14) of the vehicle body (10), a wind blocker (12) connected to the cover (16) via joints (32), said wind blocker being pivotable from an inactive position resting on the cover (16) into an active position raised above the belt line (14) of the vehicle body (10), the wind blocker (12) extending transversely to the cover (16) in said active position, and a drive (90) for moving the wind blocker (12) at least from the inactive position into the active position,
**characterized in that** the drive (90) is associated with at least one joint (32) and that the drive (90) and the joint (32) form a unit.

2. Wind stop device as defined in claim 1, **characterized in that** the drive (90) is integrated in a bearing member (80) of the joint (32).

3. Wind stop device as defined in claim 2, **characterized in that** the bearing member (80) is integrated into a wind blocker frame (50).

4. Wind stop device as defined in claim 3, **characterized in that** the bearing member is arranged in a corner area (86) of the wind blocker frame (50).

5. Wind stop device as defined in claim 2, **characterized in that** the bearing member (80') is integrated into the cover (16).

6. Wind stop device as defined in claim 5, **characterized in that** the bearing member (80') is integrated into a cover part (72).

7. Wind stop device as defined in claim 6, **characterized in that** the bearing member (80') is arranged in a corner area (187) of the cover part (72).

8. Wind stop device as defined in any one of the preceding claims,
**characterized in that** the drive (90) comprises a spring elastic energy storing member (94).

9. Wind stop device as defined in claim 8, **characterized in that** the spring elastic energy storing member is designed such that it has stored the maximum energy in the inactive position of the wind blocker (12).

10. Wind stop device as defined in claim 8 or 9, **characterized in that** the spring elastic energy storing member (94) has stored the minimum energy in the active position of the wind blocker.

11. Wind stop device as defined in any one of claims 8 to 10, **characterized in that** the spring elastic energy storing member comprises a torsion spring.

12. Wind stop device as defined in any one of the preceding claims, **characterized in that** a damping element (110) is associated with the drive (90).

13. Wind stop device as defined in claim 12, **characterized in that** the damping element (110) is associated with at least one of the joints (32).

14. Wind stop device as defined in claim 13, **characterized in that** the damping element (110) is integrated into the respective joint.

15. Wind stop device as defined in any one of claims 8 to 14, **characterized in that** the spring elastic energy storing member (94) and the damping element (110) are associated with the same joint (32).

16. Wind stop device as defined in any one of the preceding claims, **characterized in that** the wind blocker (12) is adapted to be fixed in the inactive position in relation to the cover (16) with a fixing device (130).

17. Wind stop device as defined in claim 16, **characterized in that** the fixing device (130) comprises a blocking element (132, 152, 174, 260), said blocking element transferring automatically into a blocking position and being manually transferable into a release position.

18. Wind stop device as defined in claim 16 or 17, **characterized in that** the fixing device (130) is arranged on the vehicle body (10).

19. Wind stop device as defined in claim 16 or 17, **characterized in that** the fixing device (130', 130", 130"', 130"") is arranged on the cover (16) or the wind blocker (12).

20. Wind stop device as defined in claim 19, **characterized in that** the fixing device (130") is arranged in the area of at least one of the joints (32).

21. Wind stop device as defined in claim 16, **characterized in that** the fixing device (130"', 130"") is arranged on the cover (16).

22. Wind stop device as defined in claim 21, **characterized in that** the fixing device (130", 130"', 130"") is arranged on one of the cover parts (72, 74).

23. Wind stop device as defined in any one of claims 16 to 22, **characterized in that** the fixing device (130"') is actuatable by an actuating device (220) in the sense of releasing the fixing in position.

24. Wind stop device as defined in claim 23, **characterized in that** the actuating device (220) is arranged on the respectively other cover part (74, 72).

25. Wind stop device as defined in claim 24, **characterized in that** in an unfolded state of the cover (16) the fixing device (130) is actuatable by the actuating device (220) beyond the plane of separation (76) in the sense of its release.

26. Wind stop device as defined in any one of claims 23 to 25, **characterized in that** after the unfolded state of the cover (16) has been left the fixing device (130"') is no longer actuatable by the actuating device (220).

27. Wind stop device as defined in claim 26, **characterized in that** the actuating device (220) has an actuating head (248), the fixing device (130"') being acted upon by the actuating head by it reaching beyond the plane of separation (76).

28. Wind stop device as defined in claim 26, **characterized in that** after the unfolded state of the cover (16) has been left the actuating head (248) is at such a distance from the fixing device (130"') that this is no longer actuatable.

29. Wind stop device as defined in any one of claims 23 to 28, **characterized in that** the actuating device (220) has an actuating lever (243) arranged on the driver's side of the cover (16).

30. Wind stop device as defined in any one of claims 16 to 22, **characterized in that** the fixing device (130"") is designed such that the fixing device (130"") transfers into a blocking position during movement of the wind blocker (12) in a pivoting in direction (266).

31. Wind stop device as defined in claim 30, **characterized in that** the fixing device (130"") located in the blocking position is designed such that it transfers into a release position due to movement of the wind blocker (12) in the pivoting in direction (266) and subsequent movement in a pivoting out direction (268).

32. Wind stop device as defined in claim 30 or 31, **characterized in that** the fixing device (130"") is designed as a catch device, a catching element (264) being securable in said catch device.

33. Wind stop device as defined in claim 32, **characterized in that** the fixing device (130"") comprises a catch slide (260) movable between a release position moved out of the catch slide housing (262) in the pivoting out direction (268) and a blocking position moved into the catch slide housing (262) in the pivoting in direction (266).

34. Wind stop device as defined in claim 33, **characterized in that** the catch slide (260) comprises a guide member (270) and a catcher element (272) connected to it so as to be movable, said catcher element being located in a position securing the catching element (264) in the blocking position and in a position releasing the catching element (264) in the release position.

35. Wind stop device as defined in claim 32 or 33, **characterized in that** the catch slide (260) is movable between the blocking position and the release position due to action of the catching element (264).

36. Wind stop device as defined in any one of claims 1 to 8 and 16 to 35, **characterized in that** the drive (90') is designed as an electric drive.

37. Wind stop device as defined in claim 36, **characterized in that** the electric drive (90') comprises an electric drive motor (300).

38. Wind stop device as defined in claim 37, **characterized in that** the drive (90') comprises a gear (302) driven by the electric drive motor (260).

39. Wind stop device as defined in claim 38, **characterized in that** the gear (302) is designed as a self-locking gear.

## Revendications

1. Dispositif pare-vent pour véhicules automobiles, en particulier cabriolets, comprenant un recouvrement (16) disposé à hauteur d'une ligne de ceinture (14) d'une carrosserie (10) pour une région partielle (20) d'une ouverture de l'habitacle (22) de la carrosserie (10), un coupe-vent (12) relié au recouvrement (16) par des articulations (32), lequel coupe-vent peut être pivoté d'une position non active où il repose sur le recouvrement (16) dans une position active où il s'élève au-dessus de la ligne de ceinture (14) de la carrosserie (10), dans laquelle le coupe-vent (12) s'étend transversalement au recouvrement (16), et un entraînement (90) avec lequel le coupe-vent (12) peut être déplacé au moins de la position non active dans la position active, **caractérisé en ce que** l'entraînement (90) est affecté à au moins une articulation (32) et **en ce que** l'entraînement (90) et l'articulation (32) forment une unité.

2. Dispositif pare-vent selon la revendication 1, **caractérisé en ce que** l'entraînement (90) est intégré dans un corps de palier (80) de l'articulation (32).

3. Dispositif pare-vent selon la revendication 2, **caractérisé en ce que** le corps de palier (80) est intégré dans un cadre de coupe-vent (50).

4. Dispositif pare-vent selon la revendication 3, **caractérisé en ce que** le corps de palier est disposé dans une région angulaire (86) du cadre de coupe-vent (50).

5. Dispositif pare-vent selon la revendication 2, **caractérisé en ce que** le corps de palier (80') est intégré dans le recouvrement (16).

6. Dispositif pare-vent selon la revendication 5, **caractérisé en ce que** le corps de palier (80') est intégré dans une pièce de recouvrement (72).

7. Dispositif pare-vent selon la revendication 6, **caractérisé en ce que** le corps de palier (80') est disposé dans une région angulaire (187) de la pièce de recouvrement (72).

8. Dispositif pare-vent selon l'une des revendications précédentes, **caractérisé en ce que** l'entraînement (90) comprend un accumulateur d'énergie (94) à élasticité de ressort.

9. Dispositif pare-vent selon la revendication 8, **caractérisé en ce que** l'accumulateur d'énergie à élasticité de ressort est conçu de telle façon qu'il a accumulé le maximum d'énergie dans la position non active du coupe-vent (12).

10. Dispositif pare-vent selon la revendication 8 ou 9, **caractérisé en ce que** l'accumulateur d'énergie à élasticité de ressort (94) a accumulé le minimum d'énergie dans la position active du coupe-vent.

11. Dispositif pare-vent selon l'une des revendications 8 à 10, **caractérisé en ce que** l'accumulateur d'énergie à élasticité de ressort comprend un ressort de torsion.

12. Dispositif pare-vent selon l'une des revendications précédentes, **caractérisé en ce qu'**un élément d'amortissement (110) est affecté à l'entraînement (90).

13. Dispositif pare-vent selon la revendication 12, **caractérisé en ce qu'**au moins une des articulations (32) est affectée à l'élément d'amortissement (110).

14. Dispositif pare-vent selon la revendication 13, **caractérisé en ce que** l'élément d'amortissement (110) est intégré dans l'articulation correspondante.

15. Dispositif pare-vent selon l'une des revendications 8 à 14, **caractérisé en ce que** l'accumulateur d'énergie à élasticité de ressort (94) et l'élément d'amortissement (110) sont affectés à la même articulation (32).

16. Dispositif pare-vent selon l'une des revendications précédentes, **caractérisé en ce que** le coupe-vent (12) peut être fixé dans la position non active par rapport au recouvrement (16) avec un dispositif de fixation (130).

17. Dispositif pare-vent selon la revendication 16, **caractérisé en ce que** le dispositif de fixation (130) comprend un élément de blocage (132, 152, 174, 260) qui passe automatiquement dans une position de blocage et peut être transféré manuellement dans une position de déblocage.

18. Dispositif pare-vent selon la revendication 16 ou 17, **caractérisé en ce que** le dispositif de fixation (130) est disposé sur la carrosserie (10).

19. Dispositif pare-vent selon la revendication 16 ou 17, **caractérisé en ce que** le dispositif de fixation (130', 130", 130"', 130"") est disposé sur le recouvrement (16) ou le coupe-vent (12).

20. Dispositif pare-vent selon la revendication 19, **caractérisé en ce que** le dispositif de fixation (130") est disposé dans la région d'au moins une des articulations (32).

21. Dispositif pare-vent selon la revendication 16, **caractérisé en ce que** le dispositif de fixation (130"', 130"") est disposé sur le recouvrement (16).

22. Dispositif pare-vent selon la revendication 21, **caractérisé en ce que** le dispositif de fixation (130", 130"', 130"") est disposé sur une des pièces de recouvrement (72, 74).

23. Dispositif pare-vent selon l'une des revendications 16 à 22, **caractérisé en ce que** le dispositif de fixation (130"') peut être actionné par un dispositif d'actionnement (220) pour réaliser un déblocage de la fixation.

24. Dispositif pare-vent selon la revendication 23, **caractérisé en ce que** le dispositif d'actionnement (220) est disposé sur l'autre pièce de recouvrement (74, 72).

25. Dispositif pare-vent selon la revendication 24, **caractérisé en ce que**, dans un état déplié du recouvrement (16), le dispositif de fixation (130) peut être actionné avec le dispositif d'actionnement (220) plus loin que le plan de séparation (76) pour réaliser un déblocage.

26. Dispositif pare-vent selon l'une des revendications 23 à 25, **caractérisé en ce qu'**après l'abandon de l'état déplié du recouvrement (16), le dispositif de fixation (130") ne peut plus être actionné avec le dispositif d'actionnement (220).

27. Dispositif pare-vent selon la revendication 26, **caractérisé en ce que** le dispositif d'actionnement (220) présente une tête d'actionnement (248) avec laquelle le dispositif de fixation (130") peut être sollicité, en allant au-delà du plan de séparation (76).

28. Dispositif pare-vent selon la revendication 26, **caractérisé en ce que** la tête d'actionnement (248), après l'abandon de l'état déplié du recouvrement (16), est si éloignée du dispositif de fixation (130") que celui-ci ne peut plus être actionné.

29. Dispositif pare-vent selon l'une des revendications 23 à 28, **caractérisé en ce que** le dispositif d'actionnement (220) présente un levier d'actionnement (243) qui est disposé côté conducteur du recouvrement (16).

30. Dispositif pare-vent selon l'une des revendications 16 à 22, **caractérisé en ce que** le dispositif de fixation (130"") est conçu de telle sorte que, dans le cas d'un mouvement du coupe-vent (12) dans un sens de pivotement rentrant (266), le dispositif de fixation (130"") passe dans une position de blocage.

31. Dispositif pare-vent selon la revendication 30, **caractérisé en ce que** le dispositif de fixation (130"") se trouvant en position de blocage est conçu de telle sorte que, par un mouvement du coupe-vent (12) dans le sens de pivotement rentrant (266) et un mouvement subséquent dans un sens de pivotement sortant (268), il passe dans une position de déblocage.

32. Dispositif pare-vent selon la revendication 30 ou 31, **caractérisé en ce que** le dispositif de fixation (130"") est conçu sous forme de dispositif de prise dans lequel un élément de capture (264) peut être fixé.

33. Dispositif pare-vent selon la revendication 32, **caractérisé en ce que** le dispositif de fixation (130"") comprend un coulisseau (260), lequel peut être déplacé entre une position de déblocage sortie du boîtier de coulisseau (262) dans un sens de pivotement sortant (268) et une position de blocage rentrée dans le boîtier de coulisseau (262) dans un sens de pivotement rentrant (266).

34. Dispositif pare-vent selon la revendication 33, **caractérisé en ce que** le coulisseau (260) comprend un corps de guidage (270) et un élément de prise (272) relié de façon mobile à celui-ci, lequel élément de prise est dans une position immobilisant l'élément de capture (264) dans la position de blocage et dans une position libérant l'élément de capture (264) dans la position de déblocage.

35. Dispositif pare-vent selon la revendication 32 ou 33, **caractérisé en ce que** le coulisseau (260) peut être déplacé entre la position de blocage et la position de déblocage sous l'effet de l'élément de capture (264).

36. Dispositif pare-vent selon l'une des revendications 1 à 8 et 16 à 35, **caractérisé en ce que** l'entraînement (90') est conçu sous forme d'entraînement électrique.

37. Dispositif pare-vent selon la revendication 36, **caractérisé en ce que** l'entraînement électrique (90') comprend un moteur d'entraînement électrique (300).

38. Dispositif pare-vent selon la revendication 37, **caractérisé en ce que** l'entraînement (90') comprend un mécanisme (302) entraîné par le moteur d'entraînement électrique (260).

39. Dispositif pare-vent selon la revendication 38, **caractérisé en ce que** le mécanisme (302) est conçu sous forme de mécanisme autobloquant.
